# EUROPEAN PATENT SPECIFICATION

(11) **EP 2 524 572 B1**
(45) Date of publication and mention of the grant of the patent: **30.10.2013**
(21) Application number: 10801492.9
(22) Date of filing: 15.12.2010
(51) Int. Cl.: H05B 33/08, H05B 37/02, G05B 15/02

(54) **LOW VOLTAGE CONTROL SYSTEMS AND ASSOCIATED METHODS**
NIEDERSPANNUNGSSTEUERSYSTEME UND ZUGEHÖRIGE VERFAHREN
SYSTÈMES DE COMMANDE BASSE TENSION ET PROCÉDÉS ASSOCIÉS

(30) Priority: 13.01.2010 US 294528 P
(43) Date of publication of application: 21.11.2012
(73) Proprietor: EnOcean GmbH, 82041 Oberhaching (DE)
(72) Inventor: XU, Jian, Windsor Ontario N9B 3V9 (CA); BARNETT, Thomas Alan, Ypsilanti Michigan 48197 (US); IOTT, Jeffrey, Monroe Michigan 48162 (US); BUSLEPP, James Allen, Livonia Michigan 48152 (US)
(74) Representative: Hermann, Uwe
(86) International application number: PCT/US2010/060413
(87) International publication number: WO 2011/087677

(56) References cited:
- EP-A2- 1 819 206
- US-A1- 2006 002 110

## Description

### BACKGROUND

The present disclosure generally relates to the field of control systems, and more particularly to low voltage control systems and associated methods.

Currently, the lighting systems in, for example, industrial, commercial, and residential structures are high voltage, alternating current (AC) lighting systems. For example, in the Unites States, 110 volt AC lighting systems are common. These systems are typically white light systems that utilize standard incandescent and/or fluorescent light sources.

In such systems, an AC power main supplies a building structure through a fuse box or circuit breaker box. The AC power main is received at the box and then individual AC power circuits are wired throughout the physical building structure for supplying, among other things, physical lighting fixtures. Individual switches (e.g., toggle and dimmer switches) may be used for controlling the power to individual lights or groups of lights.

Because of the intricacies associated with high voltage AC power circuits, the installation of AC lighting systems requires trained and licensed electricians for safe installation. Also, prior art AC lighting systems are difficult to access as they may be obscured behind finished walls and ceiling, consume unnecessarily large amounts of power, lack integration features with other electrical systems, and lack efficient automation features. Examples of low voltage control systems for lighting loads can be found at EP 1819206 A2 and US 2006/002110 A1.

### SUMMARY

A low voltage control system includes a controller having a plurality of switched power lines and a plurality of DC lighting loads. Each DC lighting load includes at least one DC lighting element. Each DC lighting load has an associated switch downstream from the controller that selectively connects the at least one DC lighting element to one of the plurality of switched power lines. At least one first input device includes at least one of an occupancy sensor, a light intensity sensor, or a programmable digital timer. The controller selectively powers the switched power lines in response to sensor data received from the at least one first input device or commands received from at least one wired or wireless switch in communication with the controller. At least one second input device includes at least one of a light intensity sensor or an occupancy sensor. The at least one second input device controls the associated switches of the DC lighting loads to selectively connect and disconnect the plurality of DC lighting loads from the switched power lines independently of the controller.

In another feature, a method of controlling a low voltage load includes receiving a controller operating mode selection, and receiving an association between a selected one of the plurality of DC lighting loads, a selected first input device, and a selected second input device. The selected DC lighting load is selectively powered via its associated switched power line in response to sensor data received from the assigned first input device or assigned second input device with the controller operating in the selected operating mode.

These and other features can be best understood from the following specification and drawings, the following of which is a brief description.

### BRIEF DESCRIPTION OF THE DRAWINGS

Figure 1 schematically illustrates a functional block diagram of an example of a control system that may include certain combinations of various controllers and various lighting devices.

Figure 2A schematically illustrates examples of input devices that may be suitable for use with the controllers and/or lighting devices of the control system of Figure 1.

Figure 2B schematically illustrates examples of input systems that may be suitable for use with the controllers and/or lighting devices of the control system of Figure 1.

Figures 3 through 7 schematically illustrate functional block diagrams of various examples of controllers that may be suitable for use with the control system of Figure 1, progressing from least complex to most complex.

Figures 8 through 12 schematically illustrate schematic diagrams of various examples of lighting devices that may be suitable for use with the control system of Figure 1, progressing from least complex to most complex.

Figures 13A and 13B schematically illustrate an example of a lighting system design matrix that shows examples of features and/or combinations of features that may be incorporated into the control system of Figure 1.

Figure 14A schematically illustrates a functional block diagram of an example of a control system that includes the controller of Figure 3 and one or more lighting devices of Figure 10.

Figure 14B schematically illustrates the lighting system design matrix of Figures 13A and 13B, highlighting the features included in the control system of Figure 14A.

Figure 15A schematically illustrates a functional block diagram of an example of a control system that includes the controller of Figure 4 and one or more lighting devices of Figure 10.

Figure 15B schematically illustrates the lighting system design matrix of Figures 13A and 13B, highlighting the features included in the control system of Figure 15A.

Figure 16A schematically illustrates a functional block diagram of an example of a control system that includes the controller of Figure 4 and one or more lighting devices of Figure 11.

Figure 16B schematically illustrates the lighting system design matrix of Figures 13A and 13B, highlighting the features included in the control system of Figure 16A.

Figure 17A schematically illustrates a functional block diagram of an example of a control system that includes the controller of Figure 5 and one or more lighting devices of Figure 11.

Figure 17B schematically illustrates the lighting system design matrix of Figures 13A and 13B, highlighting the features included in the control system of Figure 17A.

Figure 18A schematically illustrates a functional block diagram of an example of a control system that includes the controller of Figure 5 and one or more lighting devices of Figure 12.

Figure 18B schematically illustrates the lighting system design matrix of Figures 13A and 13B, highlighting the features included in the control system of Figure 18A.

Figure 19A schematically illustrates a functional block diagram of an example of a control system that includes the controller of Figure 6 and one or more lighting devices of Figure 11.

Figure 19B schematically illustrates the lighting system design matrix of Figures 13A and 13B, highlighting the features included in the control system of Figure 19A.

Figure 20A schematically illustrates a functional block diagram of an example of a control system that includes the controller of Figure 6 and one or more lighting devices of Figure 12.

Figure 20B schematically illustrates the lighting system design matrix of Figures 13A and 13B, highlighting the features included in the control system of Figure 20A.

Figure 21A schematically illustrates a functional block diagram of an example of a control system that includes the controller of Figure 7 and one or more lighting devices of Figure 11.

Figure 21B schematically illustrates the lighting system design matrix of Figures 13A and 13B, highlighting the features included in the control system of Figure 21A.

Figure 22A schematically a functional block diagram of an example of a control system that includes the controller of Figure 7 and one or more lighting devices of Figure 12.

Figure 22B schematically illustrates the lighting system design matrix of Figure 13, highlighting the features included in the control system of Figure 22A.

Figure 23 schematically illustrates a functional block diagram of an example of a lighting system infrastructure of the control system of Figure 1, which may correspond to a substantially wired infrastructure that may include both wired power lines and control lines.

Figure 24 schematically illustrates a functional block diagram of another example of a lighting system infrastructure of the control system of Figure 1, which may correspond to a combination wired and wireless infrastructure that may include, for example, wired power lines and wireless control lines.

Figure 25 schematically illustrates a functional block diagram of yet another example of a lighting system infrastructure of the control system of Figure 1, which may correspond to a substantially wireless infrastructure that may include, for example, battery powered components and wireless control lines.

Figure 26 schematically illustrates a flow diagram of an example of a method of installing, configuring, and operating the control system of Figure 1.

Figure 27 schematically illustrates a flow diagram of an example of a method of installing and configuring a replacement lighting device in the control system of Figure 1.

Figure 28 schematically illustrates a function block diagram of an example of a data acquisition system, which is a network of the control system of Figure 1.

### DETAILED DESCRIPTION OF THE PREFERRED EMBODIMENT

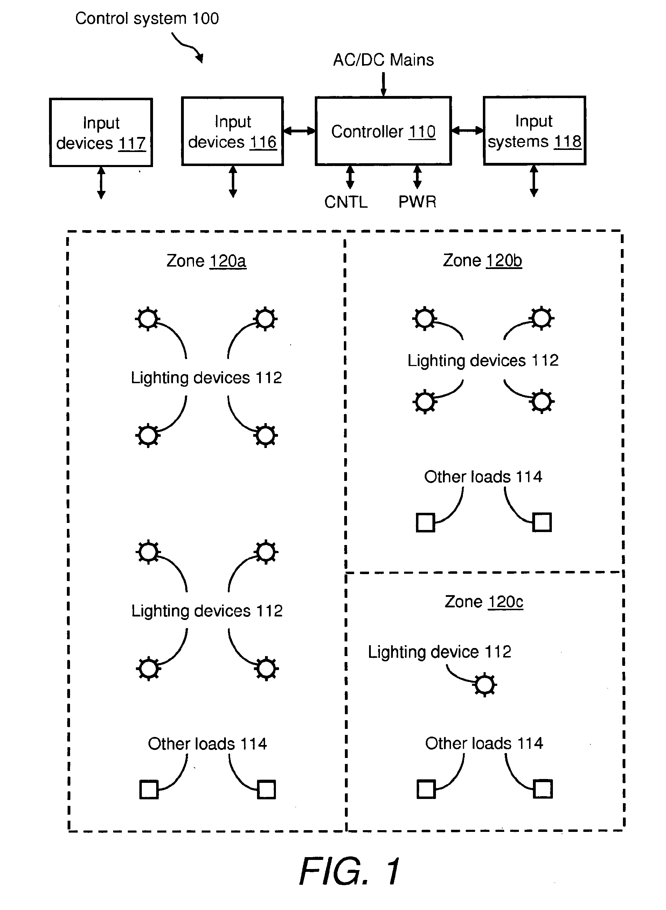

Figures 1-28 schematically illustrate a plurality of low voltage control systems and associated methods operable to control low voltage DC loads. In one example the low voltage DC loads require voltages within a range of 3 VDC - 60 VDC. In one example the low voltage DC loads require voltages of 12 VDC, 24 VDC, or 48 VDC. Of course, these are only examples, and other voltages and loads would be possible.

The low voltage control systems and associated methods include controllers having varying degrees of complexity and capabilities for support lighting devices, such as, but not limited to, light-emitting diode (LED)-based white lighting devices, organic light-emitting diode (OLED)-based white lighting devices. In some examples the low voltage control systems may also include any other DC and/or low power consumption lighting devices.

The various low voltage control systems and associated methods provide a flexible infrastructure; provide mechanisms for reducing the cost and complexity of performing upgrades and/or modifications; provide improved control, such as control by physical, logical, and/or functional associations; provide flexible configurations, improved programmability, improved automation, adjustable light patterns, adjustable colors (or shades), adjustable light levels, and adjustable timing; and provide the capability to integrate lighting systems with other types of systems in a cost-effective way.

Examples of the control systems may include controllers having varying degrees of complexity and capabilities. Further, the various controllers may support lighting devices, such as, but not limited to, light-emitting diode ("LED") based white lighting devices, organic light-emitting diode ("OLED") based white lighting devices, and any other direct current (DC) and/or low power lighting devices. The lighting devices may also have varying degrees of complexity and capabilities. The control systems may communicate with one or more types of input devices and/or one or more types of input systems. Information from the input devices and input system may be useful for providing feedback from and/or for providing control to the lighting devices. Further, a lighting system design matrix is described. The lighting system design matrix shows examples of features and/or combinations of features that may be incorporated into the control systems using various combinations or complexities of, for example, controllers, lighting devices, input devices, and/or input systems.

In one embodiment, the controller 110 ("primary controller") may include a basic controller that has switched power lines. In one embodiment, the controller 110 may include a digital controller that has switched control lines. In one example, the controller 110 may include a digital controller with a certain amount of programmability and a custom control bus. In one example, the controller 110 may include be a digital controller that has full programmability, local memory, and a standard unidirectional address bus. In one example, the controller 110 may include a digital controller that has full programmability, local memory, and a standard bidirectional address/data bus.

In one example, the lighting device 112 may include a light source only. In one example, the lighting device 112 may include a light source with passive components. In one embodiment, the lighting device 112 may include a light source with passive components and discrete components. In one example, the lighting device 112 may include a light source with passive components, discrete components, and integrated logic. In one example, the lighting device 112 may include a light source with discrete components, a processor, and local memory.

An aspect of the disclosed control systems and associated methods is that, because the systems are based on low voltage DC, the systems may reduce, or even entirely eliminate, the need for specially trained installation and/or maintenance personnel. Further, the systems may reduce, or even entirely eliminate, the disadvantages associated with high voltage AC power circuits.

Another aspect of the disclosed control systems and associated methods is that they provide a more flexible infrastructure that may reduce the cost and complexity of installation, performing upgrades, and/or performing modifications as compared with standard high voltage AC lighting systems.

Yet another aspect of the disclosed control systems and associated methods is that, because the systems are based on low voltage DC, the systems may reduce energy consumption as compared with standard high voltage AC lighting systems.

Yet another aspect of the disclosed control systems and associated methods is that they provide improved configurations and control, such as by physical, logical, and/or functional associations.

Yet another aspect of the disclosed control systems and associated methods is that they provide, for example, flexible configurations, improved programmability, improved automation, adjustable light patterns, adjustable colors (or shades), adjustable light levels, and/or adjustable timing.

Still another aspect of the disclosed control systems and associated methods is that they provide ways of integrating lighting systems with other devices and/or systems, thereby improving comfort, convenience, and home performance.

While the following describes control systems in the context of low voltage DC lighting systems that include low voltage DC lighting devices, such as LED-based and OLED-based lighting devices, this is exemplary only and not meant to be limiting. Other embodiments of control systems may include other types of lighting devices, such as, but not limited to, incandescent and/or fluorescent lighting devices as well as lighting systems developed for commercial applications in the future.

Figure 1 illustrates a functional block diagram of an example of a control system 100 that may include certain combinations of various controllers and various lighting devices. For purposes of this general description, control system 100 is a low voltage DC lighting system. However, as discussed above, this is only an example and is understood not to be limiting. Control system 100 may include a controller 110, which is a main controller for a plurality of lighting or illumination devices 112, as well as other loads 114. Additionally, one or more first input devices 116, second input devices 117 and one or more input systems 118 may provide useful information to controller 110 and/or lighting devices 112 of control system 100. The first input devices 116 are configured to control the lighting devices 112 by transmitting sensor data to the controller 110. The second input devices 117 are configured directly control the lighting devices 112 by communicating directly with the lighting devices 112 (and not communicating via the controller 110).

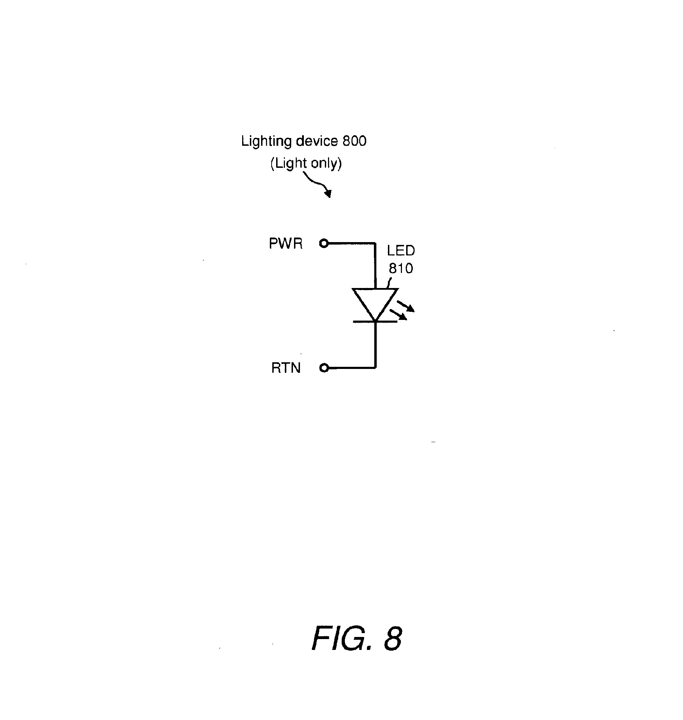

Lighting devices 112 may include, but are not limited to, LED-based or OLED-based lighting devices. LED-based or OLED-based white lighting devices are DC low voltage solid-state lighting devices. White light can be achieved with LEDs using, for example, 1) phosphor conversion, in which a blue or near-ultraviolet (UV) chip is coated with phosphor(s) to emit white light; and 2) RGB systems, in which light from multiple monochromatic LEDs (red, green, and blue) is mixed, resulting in white light. For example, an LED-based white lighting device typically may include a combination of a red LED, a green LED, and a blue LED (hereafter referred to as RGB LEDs). RGB LEDs can provide a compact, low voltage, DC light source that has unique features, such as, but not limited to, color and intensity variability. RGB LEDs may also be characterized by low power consumption and long life. Examples of lighting devices 112 that are implemented as LED-based or OLED-based white lighting devices and that have varying degrees of complexity and capabilities are described with reference to Figures 8 through 12. Of course, the lighting devices 112 could include other DC lighting elements that are not LED-based. For example, the lighting devices 112 may include one or more electroluminescent printed sheets. As another example, the lighting devices 112 may include one or more light-emitting plasma bulbs excited by radio frequency energy (e.g. those available from Luxim Corporation).

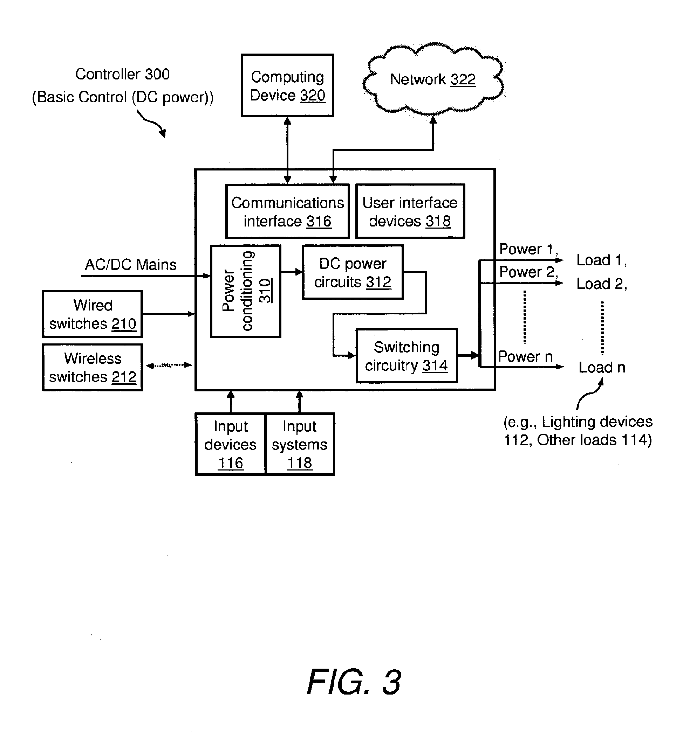

When lighting devices 112 are implemented as LED-based or OLED-based white lighting devices, controller 110 may provide DC power (PWR) and/or certain controls (CNTL) to individual or groups of lighting devices 112. Different examples of controller 110 that have varying degrees of complexity and capabilities are described with reference to Figures 3 through 7.

Varying degrees of control and processing capabilities may be implemented in controller 110 and lighting devices 112. For example, the amount of control and processing capabilities implemented in controller 110 may depend on the amount of control and processing capabilities implemented in lighting devices 112, and vice versa. In other words, the amount of control and processing capabilities implemented in controller 110 may be selected to be compatible with the amount of control and processing capabilities implemented in lighting devices 112.

Other loads 114 may include, for example, any device other than lighting devices (e.g., lighting devices 112) that may be powered by control system 100. Examples of other loads 114 may include, but are not limited to, miniature motors that are used to open and close motorized window blinds, decorative ceiling fans, concealed ventilation fans, zoned HVAC duct control, window tinting (e.g., using SAGE Electrochromics, Inc. technology), powered windows, central vacuum, solenoid valve or motorized valve for water ON/OFF or flow control in faucets, showers, tubs, mechanisms for cabinet door opening and/or locking, and the like.

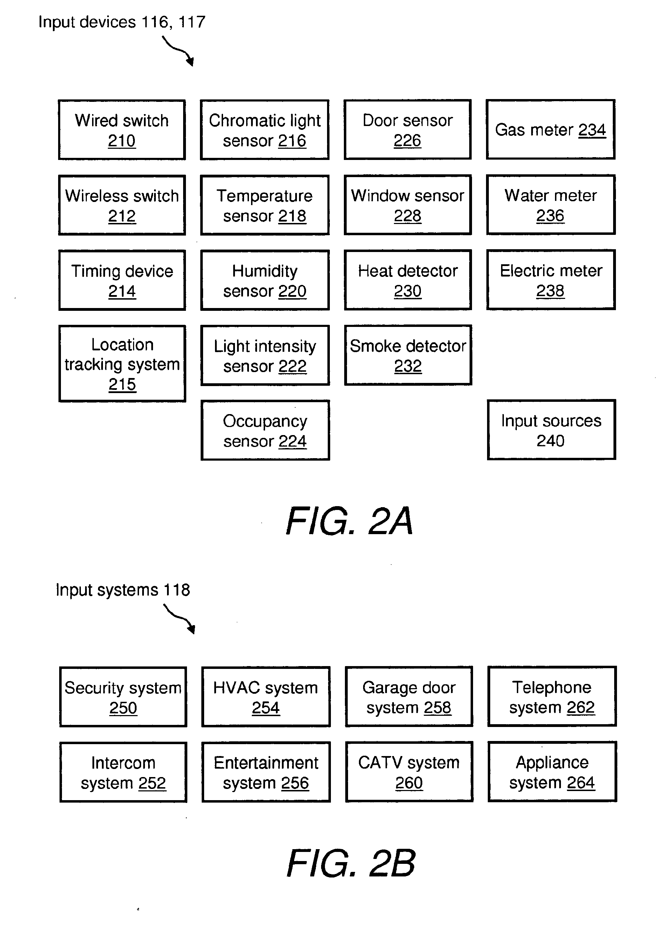

Referring to Figure 2A, examples of first input devices 116 or second input devices 117 that may be suitable for use with controller 110 and/or lighting devices 112 of control system 100 are presented. Input devices 116, 117 may include, but are not limited to, one or more of the following types of devices: a wired switch 210, a wireless switch 212 (e.g. a self-energizing switch operable to transmit wireless control signals), a timing device 214, a location tracking system 215, a chromatic light sensor 216, a temperature sensor 218, a humidity sensor 220, a light intensity sensor 222, an occupancy sensor 224, a door sensor 226, a window sensor 228, a heat detector 230, a smoke detector 232, a gas meter 234, a water meter 236, an electric meter 238, and any other input sources 240.

First input devices 116 may provide information to controller 110, and second input devices 117 may provide information to lighting devices 112. The information from the input devices 116, 117 may be useful for controlling lighting devices 112 and/or other loads 114 of control system 100. In one example, first input devices 116 are in direct communication with controller 110, and second input devices 117 are in direct communication with one or more lighting devices 112 and/or are in direct communication with one or more other loads 114. First input devices 116 may be incorporated directly into the packaging of controller 110, and second input devices 117 may be incorporated directly into the packaging of lighting devices 112, and/or other loads 114. That is, input devices 116 may be built into controller 110, and input devices 117 may be built into lighting devices 112 and/or other loads 114. Additionally, first input devices 116 may be provided separately to controller 110, but in communication therewith; and second input devices may be provided separately to lighting devices 112 and/or other loads 114, but in communication therewith. Further, a combination of separate and built in input devices 116, 117 may be utilized in control system 100. Also, although Figure 2A only illustrates a single item for each of the input sources 210-224, it is understood that a plurality of the individual input sources could be used (e.g., a plurality of wired switches 210, a plurality of wireless switches 212, etc.).

The electrical interface for each type of first input device 116 with controller 110 and each type of second input device 117 with lighting devices 116 may include, but is not limited to, open (high R) / close (low R) (e.g., a standard switch), open / ground, single bit logic high / low, a serial digital interface (e.g., USB), a digital bus (more than one-bit control bus). The interface for each type of first input device 116 with controller 110 and for each type of second input device 117 with lighting devices 112 may also be wireless, such as a WiFi interface (e.g., Bluetooth® technology).

Wired switch 210 may include any commonly known AC- and/or DC-rated switch, toggle switch, and/or dimmer switch that may be wired directly to, for example, a signal or power source and/or a signal or power load. Wired switches 210 may be used, for example, to control the power or control lines of lighting devices 112 and/or other loads 114 of control system 100.

Wireless switch 212 may include any commonly known wireless device. For example, wireless switch 212 may include a radio frequency (RF)-based switch or an infrared (IR)-based switch. In one example, wireless switch 212 may be the RF-based switch by EnOcean GmbH (Oberhaching, Germany), which is based on energy-harvesting wireless sensor technology. In one example, the wireless switch 212 may include the EnOcean product number PT 200 energy harvesting device). Wireless switches 212 may be used, for example, to signal the controller 110 to energize the power or control lines of lighting devices 112 and/or other loads 114 of control system 100.

Timing device 214 may include, for example, a programmable digital timer for turning a load (e.g., any lighting device 112) on and off at any user- and/or system-defined time. In one example, a timing device 214 may be used to automatically turn on certain lighting devices 112 at, for example, 6pm and then turn off the lighting devices 112 at 11pm.

Location tracking system 215 may include any device that can determine its geographical location to a certain degree of accuracy. For example, location tracking system 215 may include a global positioning system (GPS) receiver or a global navigation satellite system (GNSS) receiver. A GPS receiver may provide, for example, any standard format data stream, such as a National Marine Electronics Association (NMEA) data stream. Location tracking system 215 may also include an error correction component (not shown), which may include any mechanism for improving the accuracy of the geo-location data. When built into the components of control system 100, information from each location tracking system 215 may be used, for example, to automatically determine the physical location of controller 110, each lighting device 112, and/or any other loads 114. In one example, this capability may be useful for associating and/or configuring, certain lighting devices 112 and/or other loads 114 based on physical location. In another example, this capability may be useful for determining the physical location of a certain lighting device 112 and/or other load 114 when it is first installed and/or configured.

Chromatic light sensor 216 may include any commonly known chromatic white light (CWL) sensor, such as an IR-based CWL sensor. Chromatic light sensor 216 may be used, for example, to monitor a color characteristic of the light that is emitted by lighting devices 112 of control system 100. In one example the color characteristic includes at least one of light color, light hue, light saturation, light quality, or light intensity. In one example, information from chromatic light sensor 216 may be used to automatically adjust the color of certain lighting devices 112 of control system 100 upon detecting light color characteristics that are below and/or above certain thresholds.

In control system 100, the ambient temperature, humidity, and light intensity in the environment in which lighting devices 112 are operated may be captured via temperature sensor 218, humidity sensor 220, and light intensity sensor 222, respectively. In one example, temperature sensor 218 may operate from about -40C to about +125C. In one example, humidity sensor 220 may provide a relative humidity measurement (e.g., 0% to 100% humidity). In one example, light intensity sensor 222 may include a cadmium sulfide (CdS) photocell, which is a photo resistor device whose resistance decreases with increasing incident light intensity. In this example, the data that is returned from light intensity sensor 222 includes a resistance measurement.

Because the light intensity of certain light sources of lighting devices 112 may be temperature dependent, information from temperature sensor 218 may be used, for example, for feedback to controller 110 in order to detect whether the ambient temperature at a certain lighting device 112 is within its accepted operating limits.

Information from humidity sensor 220 may be used, for example, to control a humidifier or dehumidifier upon detecting humidity levels that are below and/or above certain thresholds.

Information from light intensity sensor 222 may be used, for example, to automatically adjust the light intensity of certain lighting devices 112 of control system 100 upon detecting intensity levels that are below and/or above certain thresholds.

Occupancy sensor 224 may include any commonly known occupancy sensor, such as a motion sensor. In one example, occupancy sensor 224 may include a passive infrared (PIR) motion detector. For example, information from occupancy sensor 224 may be used to automatically turn on certain lighting devices 112 of control system 100 upon detecting an occupant in its vicinity.

Door sensor 226 may include any commonly known sensing device for indicating the open or closed state of a door. Likewise, window sensor 228 may include any commonly known sensing device for indicating the open or closed state of a window. For example, information from door sensor 226 and/or window sensor 228 may be used to automatically turn on certain lighting devices 112 of control system 100 upon sensing the opening and/or closing of a door and/or window, respectively.

Heat detector 230 may include any commonly known heat sensing device for indicating, for example, the presence of fire and/or excessive heat in the environment. Likewise, smoke detector 232 may include any commonly known smoke sensing device for indicating the presence of smoke in the environment. For example, information from heat detector 230 and/or smoke detector 232 may be used, for example, to automatically turn on certain lighting devices 112 of control system 100 upon sensing the presence of excessive heat and/or smoke, respectively.

Gas meter 234 may include any commonly known residential or industrial gas meter device. The gas meter 234 may be used for measuring gas consumption by volume (e.g., in cubic feet), for example, month-to-month. Gas meters may also provide pressure measurements. In one example, gas meter 234 provides a digital measurement. For example, information from gas meter 234 may be used by control system 100 to shut off certain lighting/loads, sound an alarm, and/or flash certain lights due to any problem in the gas system, such as, but not limited to, a gas leak, an overpressure condition, malfunctioning appliances, and inefficient appliances. In other examples, information from gas meter 234 may be used by control system 100 to shut off the gas when control system 100 detects no occupancy in a house for certain period of time and/or to setback the temperature (in a house that is gas heated) when control system 100 detects no occupancy in a house for certain period of time.

Water meter 236 may include any commonly known residential or industrial water meter device. The water meter 236 may be used for measuring water consumption by volume (e.g., in gallons), for example, month-to-month. In one example, water meter 236 provides a digital measurement. For example, information from water meter 236 may be used by control system 100 to shut off certain lighting/loads, sound an alarm, and/or flash certain lights due to any problem in the water system. For example, information from water meter 236 may be used by control system 100 for closed-loop feedback and/or smart control of solenoid valve or motorized valve for water ON/OFF or flow speed in faucets, showers, and tubs applications. Further, information from water meter 236 may be used to shut-off the water when control system 100 detects no occupancy in a house for certain period of time. The water shut-off could be the entire house or a portion of the house, such as the valves for toilets.

Electric meter 238 may include any commonly known residential or industrial electric meter device. The electric meter 238 may be used for measuring electricity consumption (e.g., in kilowatts), for example, month-to-month. In one example, electric meter 238 provides a digital measurement. For example, information from electric meter 238 may be used by control system 100 to shut off certain lighting/loads, sound an alarm, and/or flash lights due to any problem in the electric system. Further, information from electric meter 238 may be used by control system 100 to show the electricity usage reduction that results from using (a) dimming, (b) an eco mode; (c) a motion-monitored auto-OFF control of control system 100, and the like.

Input sources 240 may include any other devices, sensors, instrumentation, and/or systems that may provide useful information to control system 100. For example, input sources 240 may include portable test equipment, a remote monitor/keypad (i.e. user interface), and the like. In one example input sources 240 may include an input device remote from the controller of the control system 100 for accepting user commands to adjust and/or manually override a setting (e.g. lighting setting, temperature setting, etc.) without having to be in proximity to the controller and without having to use a user interface on the controller.

Referring to Figure 2B, examples of input systems 118 that may be suitable for use with controller 110 and/or lighting devices 112 of control system 100 are presented. Input systems 118 may include, but are not limited to, one or more of the following types of systems: a security system 250, an intercom system 252, an HVAC system 254, an entertainment system 256, a garage door system 258, a CATV system 260, a telephone system 262, and an appliance system 264.

Input systems 118 may provide information to controller 110 and/or lighting devices 112 that may be useful for controlling lighting devices 112 and/or other loads 114 of control system 100. Input systems 118 may be in direct communication with controller 110; in direct communication with one or more lighting devices 112; in direct communication with one or more other loads 114; and/or in direct communication with any combinations of controller 110, lighting devices 112, and other loads 114.

Security system 250 may include any commonly known security system for monitoring for the presence of intruders and/or the presence of other hazardous conditions, such as fire, smoke, gas, and/or water. Certain input devices 116, 117 may be associated with security system 250. For example, one or more temperature sensors 218, humidity sensors 220, light intensity sensors 222, occupancy sensors 224, door sensors 226, window sensors 228, heat detectors 230, smoke detectors 232, and any combinations thereof may be associated with security system 250. Further, intercom system 252 may be associated with security system 250. Information from security system 250 may be used, for example, to automatically turn on and/or flash certain lighting devices 112 of control system 100 upon detecting any condition that causes an alert or alarm to be generated.

HVAC system 254 may include any commonly known heating, ventilating, and air conditioning system for providing and maintaining indoor environmental comfort. In one example, when a certain occupancy sensor 224 of control system 100 detects that no one is present in a room, the lighting devices 112 may be turned off and/or the heat or air-conditioning level that is controlled by HVAC system 254 may be adjusted such as through manipulation of a damper.

Entertainment system 256 may include any commonly known entertainment system, such as, but not limited to, any home theater system. Entertainment system 256 may include, for example, high-quality audio and surround sound technologies, a large-screen video display, audio/video players, audio/video receivers, audio/video amplifiers, and the like. In one example, information that entertainment system 256 has been activated may be used by control system 100 to, for example, automatically adjust the color and/or intensity of certain lighting devices 112 that are in the vicinity of entertainment system 256. In one example, when other loads 114 include motorized window blinds, upon sensing that entertainment system 256 is activated, control system 100 may be used to automatically drive the motors in order to close the window blinds that are in the vicinity (e.g. to adjust brightness for a television).

Garage door system 258 may include, for example, any commonly known garage door opener system. Information from garage door system 258 may be used, for example, to automatically turn on and/or off certain lighting devices 112 of control system 100 upon indicating that the garage door is being opened and/or closed.

CATV system 260 may include any commonly known cable television system for connecting to televisions in, for example, a home or business. Information from CATV system 260 may be used, for example, to automatically dim certain lighting devices 112 of control system 100 upon indicating that a device (e.g., television) that is connected to CATV system 260 is activated.

Telephone system 262 may include any commonly known landline telephone system in, for example, a home or business. Telephone system 262 or similar communication connection may be used as a means of remote access to control system 100. In one example, using telephone system 262, a user may dial into control system 100 in order to turn off and/or on certain lighting devices 112 of control system 100.

Appliance system 264 may include any system that is associated with, for example, a home appliance. Appliance system 264 may include, for example, the system associated with a refrigerator, a freezer, an oven unit, a microwave unit, a clothes washer, a clothes dryer, or another similar appliance. In one example with respect to a refrigerator, when a certain occupancy sensor 224 of control system 100 detects that the kitchen has not been occupied for an extended period of time, the operating mode of the refrigerator may be adjusted, such as put in an energy saving mode.

Referring again to Figure 1, certain zones 120 may be associated with control system 100. By way of example, Figure 1 shows that control system 100 may include zones 120a, 120b, and 120c. Zones 120 may be physical, logical, and/or functional zones to which certain arrangements and/or configurations of lighting devices 112, other loads 114, input devices 116, 117, and/or input systems 118 may be associated. In one example, a certain zone 120 may be associated with a certain room in a building. In one example, a certain zone 120 may be associated with a certain group of lighting. In one example, a certain zone 120 may be associated with any outdoor lighting. In one example, a certain zone 120 may be associated with any walkway, hallway, and/or stairway lighting.

Figures 3 through 7 illustrate functional block diagrams of examples of controller 110 that may be suitable for use with control system 100, progressing from least complex to most complex. However, it is understood that the embodiments of controller 110 shown in Figures 3 through 7 are only examples, and that other configurations could be used.

Referring to Figure 3, a functional block diagram of a controller 300 is presented. Controller 300 is one example of controller 110 of control system 100 of Figure 1. In this embodiment, controller 300 provides basic control of DC power that is delivered to the loads, such as to lighting devices 112 and/or any other loads 114. One characteristic of controller 300 is that its loads are controlled simply by supplying or removing power. The internal design of controller 300 may include any circuits that support this functionality.

In one example, controller 300 may include power conditioning module 310 for receiving the AC/DC power main and processing it to meet the power requirements of the internal components of controller 300 as well as the power requirements of certain loads 1 through n. For example, the power conditioning module 310 may include, but is not limited to, an AC-to-DC converter function, a voltage regulator function, a current limiting function, over-voltage protection, a DC-DC step-up voltage conversion, or a DC-DC step-down voltage conversion.

Although only a single DC power circuit is illustrated, it is understood that the controller 300 may include a DC power circuit 312 for each load 1 through n. In one example, the control system 100 may include multiple DC power circuits 312-1 through 312-n controlling lighting devices 112-1 through 112-n via switching circuitry 314. Controller 300 may include simple switching circuitry 314 along with any associated logic elements (not shown). In one example, switching circuitry 314 may include a matrix of, for example, solid state switches and/or relays that is used to switch off and on the DC power to the loads.

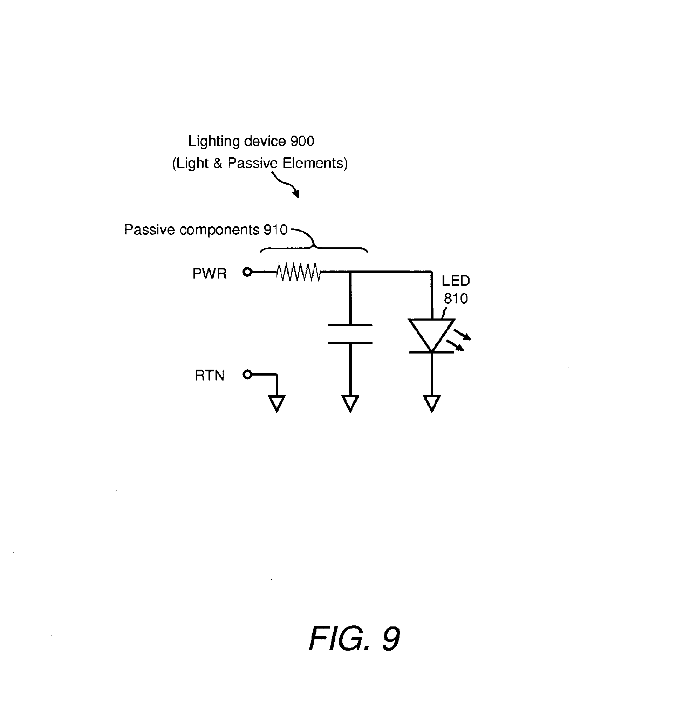

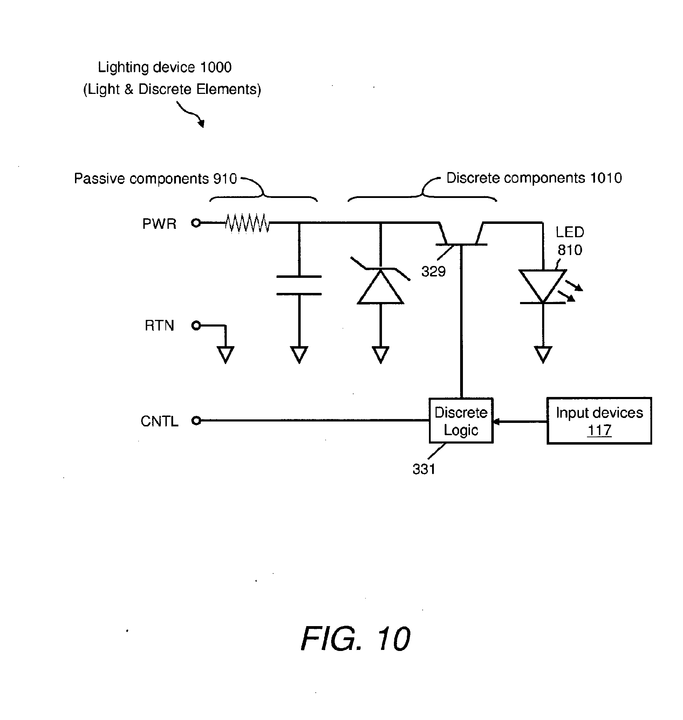

In one example, switching circuitry 314 may be controlled by decoding the states of one or more wired switches 210 and/or wireless switches 212 that are connected as inputs to controller 300, interpreting the information from input devices 116 and/or input systems 118 that are connected to the input of controller 300, and any combination thereof. In doing so, the loads 1 through n are controlled. An example of a lighting device that has capabilities that are compatible with the capabilities of controller 300 is described with reference to Figures 9 and 10.

Further, controller 300 may include a communications interface 316 for communicating with any external computing device 320 and/or network 322. Communications interface 316 may include any wired and/or wireless communications interface. Examples of wired communications interfaces may include, but are not limited to, USB ports, RS232 connectors, RJ45 connectors, Ethernet, and any combinations thereof. Examples of wireless communications interfaces may include, but are not limited to, an Intranet connection, Internet, Bluetooth® technology, Wi-Fi, Wi-Max, IEEE 802.11 technology, radio frequency (RF), Infrared Data Association (IrDA) compatible protocols, Local Area Networks (LAN), Wide Area Networks (WAN), Shared Wireless Access Protocol (SWAP), any combinations thereof, and other types of wireless networking protocols.

Additionally, if desired, certain user interface devices (e.g., user interface devices 318) may be integrated into controller 300. Examples of user interface devices may include, but are not limited to, a video display, a touch screen, a keypad, a keyboard, a mouse, push buttons, dials, toggle switches, etc.

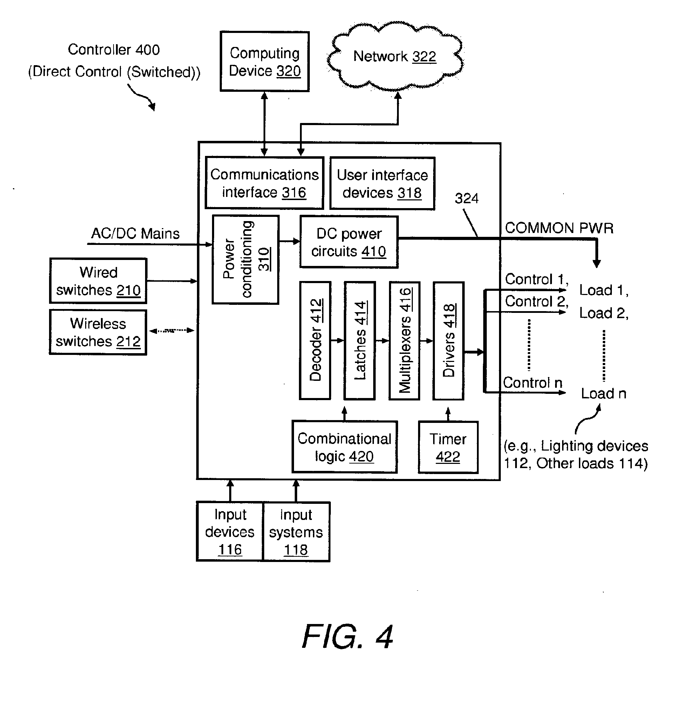

Referring to Figure 4, a functional block diagram of a controller 400 is presented. Controller 400 is another example of controller 110 of control system 100 of Figure 1. In this example, controller 400 is a digital controller that provides a higher level of complexity and/or capability than controller 300 of Figure 3. One characteristic of the controller 400 is that the controller 400 continuously supplies DC power to its loads via one or more DC power buses (see "COMMON PWR"), while the control of the loads (e.g., turning on and off the loads) is performed via separate discrete control lines (see "Control 1" through "Control n"). The internal design of controller 400 may include any circuits that support this functionality.

For example, controller 400 may include power conditioning module 310 and communications interface 316 that are described with reference to controller 300 of Figure 3. Additionally, if desired, controller 400 may include user interface devices 318, which is also described with reference to controller 300 of Figure 3.

Additionally, controller 400 may include one or more DC power circuits 410 for driving one or more common power (COMMON PWR) outputs 324 that are suitable for continuously supplying DC power in common to one or more groups of loads. For example, loads 1 through n may be organized in one or more groups that are ganged to the one or more COMMON PWR outputs, respectively. While Figure 4 shows only one COMMON PWR output 324, it is understood that the controller 400 may include a COMMON PWR output for each of these groups of loads. While COMMON PWR 324 is operating continuously or substantially continuously, it is also understood that COMMON PWR may switched be off (e.g., for safety reasons) if desired.

Further, controller 400 may include control logic for providing a discrete control line to each load 1 through n. For example, the controller 400 may include control logic for providing discrete control lines 1 through n to, for example, lighting devices 112-1 through 112-n. In this example, in normal use, the switching is performed at lighting devices 112-1 through 112-n under control of the discrete control lines 1 through n. At the same time, lighting devices 112 are powered from the COMMON PWR output.

In one example, the logic included in controller 400 may have little or no programmability. For example, controller 400 may include simple logic, such as, but not limited to, decode logic (e.g., decoder 412), latches (e.g., latches 414), multiplexers (e.g., multiplexers 416), control lines drivers (e.g., drivers 418), any combinational logic (e.g., combinational logic 420), timing functions (e.g., timer 422), and the like.

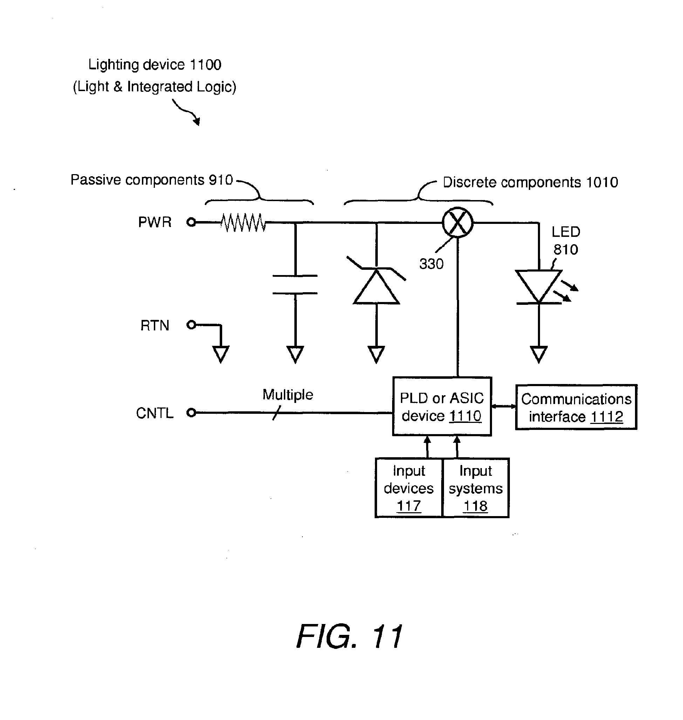

In one example, the discrete control lines 1 through n may be controlled by decoding the states of one or more wired switches 210 and/or wireless switches 212 that are connected to the input of controller 400, interpreting the information from input devices 116 and/or input systems 118 that are connected to the input of controller 400, and any combination thereof. In doing so, the loads 1 through n are controlled. Examples of lighting devices that have capabilities that are compatible with the capabilities of controller 400 are described with reference to Figures 10 and 11.

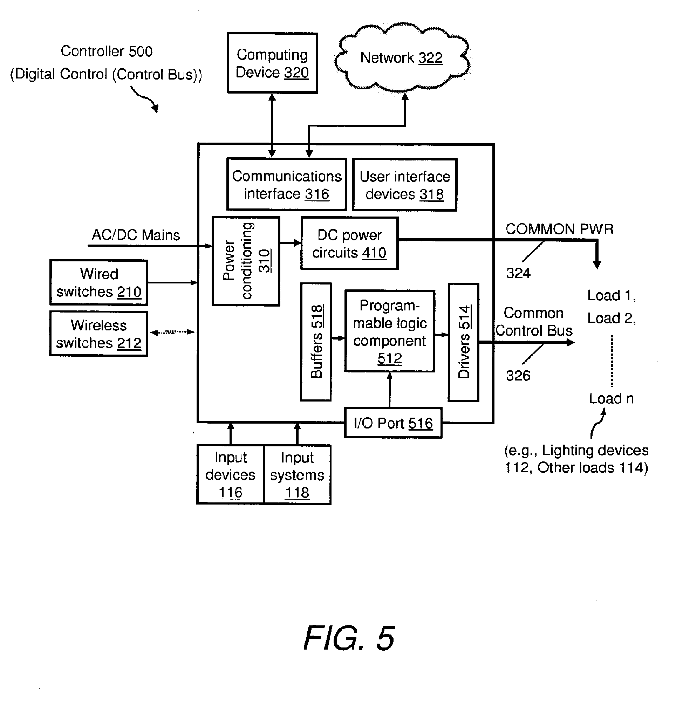

Referring to Figure 5, a functional block diagram of a controller 500 is presented. Controller 500 is yet another example of controller 110 of control system 100 of Figure 1. In this example, controller 500 is a digital controller that provides a yet higher level of complexity and/or capability than controller 300 of Figure 3 and controller 400 of Figure 4. One characteristic of controller 500 is that controller 500 continuously supplies DC power to its loads via one or more DC power buses 324 (see COMMON PWR), while the control of the loads is by a common control bus 326 rather than by discrete control lines. The common control bus 326 may include a predefined quantity of control lines such that the number of control lines is less than the number of controlled loads (e.g., 1 control line could control 2 loads, 2 control lines could control 4 loads, 3 control lines could control 8 loads, etc.). In this example, the controller's loads lack self-recognition addressing capabilities (e.g. a load cannot ignore a command that is presented to it). The internal design of controller 500 may include any circuits that support this functionality.

For example, controller 500 may include power conditioning module 310 and communications interface 316 that are described with reference to controller 300 of Figure 3. Additionally, controller 500 may include user interface devices 318, which is also described with reference to controller 300 of Figure 3. Additionally, controller 500 may include the one or more DC power circuits 410 of Figure 4 for driving the one or more COMMON PWR outputs 324 that are suitable for continuously supplying DC power in common to one or more groups of loads.

Further, controller 500 may include control logic (e.g. within programmable logic component 512) for providing a common control bus 326 to loads 1 through n, such as to lighting devices 112-1 through 112-n. The common control bus 326 may include, for example, 4 or 8 control lines that may be decoded at each load. In the case of multiple COMMON PWR outputs, there may be multiple control buses 326 that are associated with the COMMON PWR outputs, respectively.

The logic included in controller 500 may have a certain amount of programmability. For example, controller 500 may include programmable logic 512. The output of programmable logic component 512 may supply a set of control lines drivers (e.g., drivers 514) that are driving the common control bus. Programmable logic component 512 may include, for example, a simple programmable logic device (PLD); any complex logic, such as an application-specific integrated circuit (ASIC) device; a microcontroller; and/or a microprocessor. Additionally, programmable logic component 512 may include programmable software. In this example, an input/output (I/O) port 516 is provided for accessing programmable logic component 512.

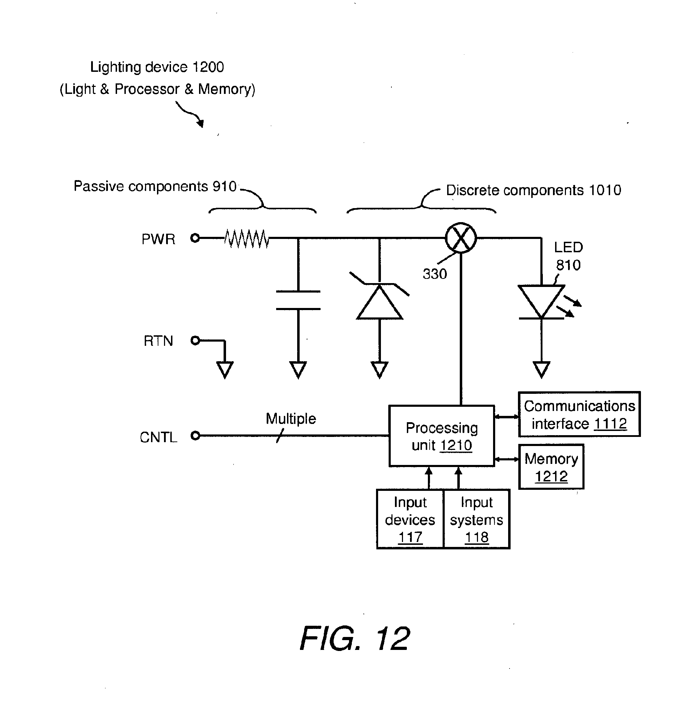

In one example, programmable logic component 512 may be programmed to decode the states of one or more wired switches 210 and/or wireless switches 212 that are connected to the input of controller 500, interpret information from input devices 116 and/or input systems 118 that are connected to the input of controller 500, and any combination thereof, and then provide information on the one or more control buses accordingly. In doing so, the loads 1 through n are controlled. In one example, wired switches 210, wireless switches 212, input devices 116, and/or input systems 118 may be connected to programmable logic component 512 through a set of buffers 518. In on example the set of buffers 518 may assist with the processing of complicated algorithms that the programmable logic component 512 would have difficulty processing in real time, by acting as a temporary storage for information and/or instructions. Examples of lighting devices that have capabilities that are compatible with the capabilities of controller 500 are described with reference to Figures 11 and 12.

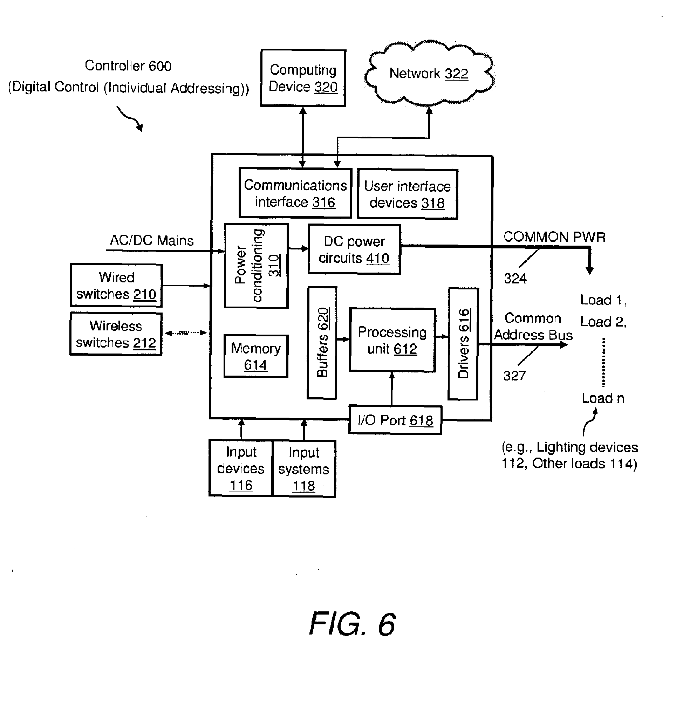

Referring to Figure 6, a functional block diagram of a controller 600 is presented. Controller 600 is yet another example of controller 110 of control system 100 of Figure 1. In this example, controller 600 is a digital controller that provides a yet higher level of complexity and/or capability than controller 300 of Figure 3, controller 400 of Figure 4, and controller 500 of Figure 5. One characteristic of controller 600 is that it continuously supplies DC power to its loads via one or more DC power buses, while the control of the loads is by a standard unidirectional address bus 340 that may be driven by, for example, a processing unit 612. The internal design of controller 600 may include any circuits that support this functionality.

For example, controller 600 may include power conditioning module 310 and communications interface 316 that are described with reference to controller 300 of Figure 3. Additionally, if desired, controller 600 may include user interface devices 318, which is also described with reference to controller 300 of Figure 3. Additionally, controller 600 may include the one or more DC power circuits 410 of Figure 4 for driving the one or more COMMON PWR outputs 324 that are suitable for continuously supplying DC power in common to one or more groups of loads.

Further, controller 600 may include control logic (e.g. within processing unit 612 or memory 614) for providing a common standard unidirectional address bus 327 to loads 1 through n, such as to lighting devices 112-1 through 112-n. For example, the logic included in controller 600 may include a fully programmable processing unit 612 and a certain amount of local data storage (e.g., memory 614) for controlling a standard unidirectional address bus 327. The output of processing unit 612 may supply a set of unidirectional control line drivers (e.g., drivers 616) that are driving the standard unidirectional address bus 327. Processing unit 612 may include, for example, a microcontroller, microprocessor, or any other complex logic, such as an ASIC device. I/O port 618 is provided for accessing processing unit 612. The address bus 327 enables all of the controller's loads to share a single address bus (if desired), and the controller's loads possess self-recognition such that all the loads may receive commands but only the load for which the command is designated will act upon the command. Thus, with the address bus 327, individual loads are able to ignore commands not meant for them.

The standard unidirectional address bus 327 may include, for example, an 802.11-based address bus, a WiFi-based address bus, a USB-based address bus, etc. Because the address bus is unidirectional, information from controller 600 may be transmitted to the loads, but the loads are not able to return information via the address bus to controller 600.

In one example, processing unit 612 may be programmed to decode the states of one or more wired switches 210 and/or wireless switches 212 that are connected to the input of controller 600, interpret information from input devices 116 and/or input systems 118 that are connected to the input of controller 600, and any combination thereof, and then provide information on the standard unidirectional address bus 327 accordingly. In doing so, the loads 1 through n are controlled. In one example, wired switches 210, wireless switches 212, input devices 116, and/or input systems 118 may be connected to processing unit 612 through a set of buffers 620. In on example the set of buffers 620 may assist with the processing of complicated algorithms that the processing unit 612 would have difficulty processing in real time, by acting as a temporary storage for information and/or instructions. Examples of lighting devices that have capabilities that are compatible with the capabilities of controller 600 are described with reference to Figures 11 and 12.

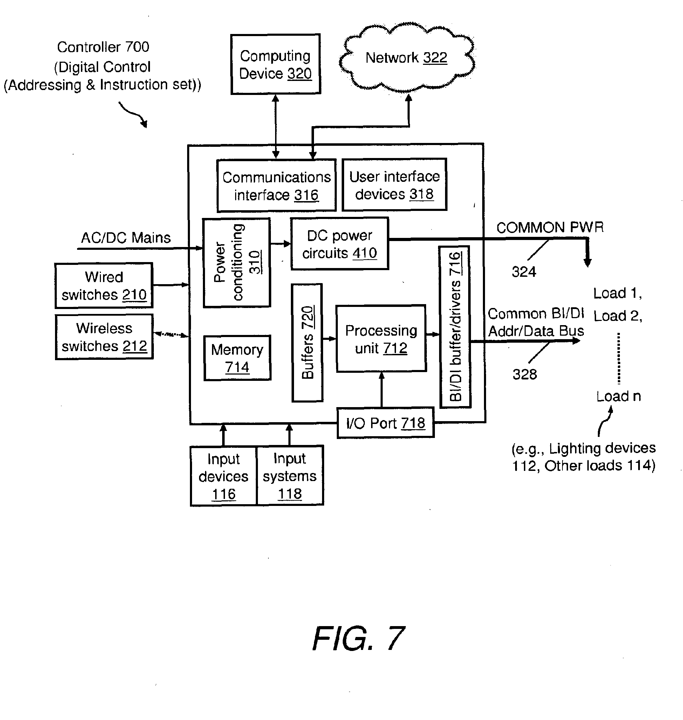

Referring to Figure 7, a functional block diagram of a controller 700 is presented. Controller 700 is still another example of controller 110 of control system 100 of Figure 1. In this example, controller 700 is a digital controller that provides a still higher level of complexity and/or capability than controller 300 of Figure 3, controller 400 of Figure 4, controller 500 of Figure 5, and controller 600 of Figure 7. One characteristic of controller 700 is that it continuously supplies DC power to its loads via one or more DC power buses, while the control of the loads is by a standard bidirectional address and data bus 328 that may be driven by, for example, a processing unit 712. The internal design of controller 700 may include any circuits that support this functionality.

For example, controller 700 may include power conditioning module 310 and communications interface 316 that are described with reference to controller 300 of Figure 3. Additionally, if desired, controller 700 may include user interface devices 318, which is also described with reference to controller 300 of Figure 3. Additionally, controller 700 may include the one or more DC power circuits 410 of Figure 4 for driving the one or more COMMON PWR outputs 324 that are suitable for continuously supplying DC power in common to one or more groups of loads.

Further, controller 700 may include control logic (e.g. within processing unit 712 or memory 714) for providing a common standard bidirectional address and data bus to loads 1 through n, such as to lighting devices 112-1 through 112-n. The logic included in controller 700 may include a fully programmable processing unit 712 and a certain amount of local data storage (e.g., memory 714) for controlling a standard bidirectional address and data bus. Again, processing unit 712 may include, for example, a microcontroller, microprocessor, or any other complex logic, such as an ASIC device. I/O port 718 is provided for accessing the processing unit 712.

The standard bidirectional address and data bus 328 may include, for example, an 802.11-based address and data bus, a WiFi-based address and data bus, a USB-based address and data bus, etc. For wired connectively, the output of processing unit 712 may supply a set of bidirectional control line drivers (e.g., BI/DI buffer/drivers 716) that are driving the standard bidirectional address and data bus 328.

Because the address bus 328 is bidirectional, information from controller 700 may be transmitted to the loads, and the loads are able to return information via the address bus 328 to controller 700. This enables a fully programmable instruction set to be used by processing unit 712 and/or the loads that are connected to controller 700. As a result, a yet higher level of programmability and intelligence is provided as compared with, for example, controller 600 of Figure 6 that has a unidirectional bus 327 only. For example, the loads may confirm a desire to execute a given command, or may confirm that a command was successfully executed.

In one example, an instruction set (i.e., programmed instructions) that is used by processing unit 712 may be used to decode the states of one or more wired switches 210 and/or wireless switches 212 that are connected to the input of controller 700, interpret information from input devices 116 and/or input systems 118 that are connected to the input of controller 700, interpret information returned from loads 1 through n, and any combinations thereof and then provide information on the standard bidirectional control bus accordingly. In doing so, the loads 1 through n are controlled. In one example, wired switches 210, wireless switches 212, input devices 116, and/or input systems 118 may be connected to processing unit 712 through a set of buffers 720. In on example the set of buffers 720 may assist with the processing of complicated algorithms that the processing unit 712 would have difficulty processing in real time, by acting as a temporary storage for information and/or instructions. Examples of lighting devices that have capabilities that are compatible with the capabilities of controller 700 are described with reference to Figures 11 and 12.

Figures 8 through 12 illustrate schematic diagrams of examples of lighting devices 112 that may be suitable for use with control system 100, progressing from least complex to most complex. However, it is understood that the embodiments of lighting devices 112 shown in Figures 8 through 12 are only examples, and that other configurations could be possible.

Referring to Figure 8, a schematic diagram of a lighting device 800 is presented. Lighting device 800 is an example of a lighting device 112 of control system 100 of Figure 1. In this example, lighting device 800 provides a simple lighting device that has a very low level of complexity. More specifically, the main characteristic of lighting device 800 is that it provides a light source only, with substantially no other supporting passive or active components. For example, lighting device 800 may include a low voltage DC light source, such as an LED 810, that is arranged between a power (PWR) terminal and a return (RTN) terminal. Lighting device 800 includes substantially no other supporting passive or active components. LED 810 may include, for example, an RGB LED for producing white light. Controller 300 of Figure 3 is an example of a controller that is compatible with lighting device 800.

Referring to Figure 9, a schematic diagram of a lighting device 900 is presented. Lighting device 900 is another example of a lighting device 112 of control system 100 of Figure 1. In this example, lighting device 900 provides a slightly higher level of complexity than lighting device 800 of Figure 8. One characteristic of lighting device 900 is that it provides a light source in combination with certain passive components. For example, lighting device 900 may include the LED 810 that is described in Figure 8 in combination with passive components 910, all arranged between the PWR and RTN terminals. In one example, passive components 910 may include a current limiting resistor and a decoupling capacitor. Controller 300 of Figure 3 is an example of a controller that is compatible with lighting device 900.

Although the controllers 300-700 of Figures 3-7 are illustrated as receiving AC/DC mains and then providing a power output for their respective loads, in one example the control system 100 may include a separate DC power source that bypasses the controllers 300-700. For example, the common power bus 324 may be connected to a separate DC power source without the use of power conditioning module 310 and DC power circuits 410.

Referring to Figure 10, a schematic diagram of a lighting device 1000 is presented. Lighting device 1000 is yet another example of a lighting device 112 of control system 100 of Figure 1. In this example, lighting device 1000 provides a yet higher level of complexity than lighting device 800 of Figure 8 and lighting device 900 of Figure 9. More specifically, the main characteristic of lighting device 1000 is that it provides a light source, passive components, as well as certain discrete logic components, all arranged between the PWR and RTN terminals. For example, lighting device 1000 may include the LED 810 that is described in Figure 8 and passive components 910 that is described in Figure 9 in combination with discrete components 1010. In one example, discrete components 1010 may include one or more solid state switching devices 329 and/or any other discrete logic circuit 331 for responding to a control signal that is provided at a control (CNTL) terminal. In one example the discrete logic 331 is responsive to commands from the input devices 117. In one example the switching device 329 has a default state of "ON" such that a flow of current to the LED 810 is by default controlled by the controller (e.g. Controller 300 of Figure 3 and controller 400 of Figure 4), but wherein the input devices 117 may turn OFF the switch 329 via the discrete logic circuit 331. Thus, the Controller 300 of Figure 3 and controller 400 of Figure 4 are examples of controllers that are compatible with lighting device 1000.

Referring to Figure 11, a schematic diagram of a lighting device 1100 is presented. Lighting device 1100 is yet another example of a lighting device 112 of control system 110 of Figure 1. In this example, lighting device 1100 provides a yet higher level of complexity than lighting device 800 of Figure 8, lighting device 900 of Figure 9, and lighting device 1000 of Figure 10. More specifically, the main characteristic of lighting device 1100 is that it provides a light source, passive components, discrete logic components, as well as simple and/or integrated logic. For example, lighting device 1100 may include LED 810 that is described in Figure 8, passive components 910 that is described in Figure 9, discrete components 1010 that is described in Figure 10, in combination with, for example, a programmable logic device ("PLD") or application-specific integrated circuit ("ASIC") device 1110, all arranged between the PWR and RTN terminals. In one example, PLD or ASIC device 1110 provides a certain amount of programmability as well as the ability to process certain information, such as information from a control bus, an address bus, a data bus, input devices 117, input systems 118, and any combinations thereof. In this example, there may be multiple CNTL terminals for receiving the bus. A modulation circuit 330 is operable to modulate a voltage received from PWR input as needed for the LED 810 load. In one example the modulation circuit 330 may receive solar power via PWR input and may condition that input to provide a proper voltage (e.g. an acceptable voltage range having minimal fluctuation).

Although the PLD or ASIC device 1110 may include a certain amount of programmability, in one example this programmability may be rigidly defined. For example, if an ASIC was used, (1) the ASIC would implement logic using logic hardware components (e.g. logic gates), and could not be reconfigured without replacing or rerouting those components, (2) any programmability would reside in arrangement of those components, and (3) upgrading the ASIC would likely require replacing the ASIC circuit with another ASIC circuit. As another example, if a PLD was used, the PLD would be programmable (in one example only programmable by a technician) but would only be programmable prior to performing a task, and could not be dynamically reconfigured on the fly during execution of that task. For example, if the PLD was programmed to dim an incandescent bulb, the PLD would be unable to reconfigure itself to dim a fluorescent bulb without the performance of a software update. In one example, either the PLD or ASIC device lacks the ability to dynamically learn a user's routine and instead relies on predefined values (e.g. use lighting settings based upon lookup table instead of based upon actual detected user light settings history).

Lighting device 1100 may also include a communications interface 1112. Communications interface 1112 may be substantially the same as communications interface 316 of controller 300 that is described with reference to Figure 3. PLD or ASIC device 1110 provides the ability to manage any communications that may occur via communications interface 1112. In one example the communications interface 1112 may be used to communicate bidirectionally with the PLD or ASIC 1110 to obtain information from the at least one DC lighting element (e.g. LED 810) of its associated lighting device (e.g. lighting device 1100), such as status information, feedback, or maintenance data (e.g. estimated remaining life of the DC lighting element). Controller 400 of Figure 4, controller 500 of Figure 5, controller 600 of Figure 6, and controller 700 of Figure 7 are examples of controllers that are compatible with lighting device 1100.

Referring to Figure 12, a schematic diagram of a lighting device 1200 is presented. Lighting device 1200 is still another example of a lighting device 112 of control system 100 of Figure 1. In this example, lighting device 1200 provides a still higher level of complexity than lighting device 800 of Figure 8, lighting device 900 of Figure 9, lighting device 1000 of Figure 10, and lighting device 1100 of Figure 11. One characteristic of lighting device 1200 is that it provides a light source, passive components, discrete logic components, as well as a processing unit and local memory. For example, lighting device 1200 may include the LED 810 that is described in Figure 8, passive components 910 that is described in Figure 9, discrete components 1010 that are described in Figure 10, in combination with, for example, a processing unit 1210 and memory 1212, all arranged between the PWR and RTN terminals. In one example, processing unit 1210 and memory 1212 provide a fully programmable lighting device that has the ability to execute program instructions, which includes the ability to process certain information, such as information from a control bus, an address bus, a data bus, input devices 117, input systems 118, and any combinations thereof. The processing unit 1210 has more functionality than the PLD or ASIC device 1110. For example, the processing unit 1210 may have the ability to learn a user's routine instead of relying on predefined values and lookup tables. Also, the processing unit 1210 may be dynamically able to reconfigure itself during operation. For example, the processing unit 1210 may be able to dynamically select a dimming algorithm (e.g. incandescent dimming or fluorescent dimming) in response to a detected lighting source without requiring a software update. In one example the processing unit 1210 may be locked dock so that consumers cannot perform upgrades without obtaining technician assistance. In this example, there may be multiple CNTL terminals for receiving the bus. Modulation circuit 330 is operable to modulate a voltage received from PWR input as needed for the LED 810 load.

Lighting device 1200 may also include the communications interface 1112 of Figure 11, enabling the communications interface 1112 to communicate bidirectionally with the processing unit 1210 to obtain information from the at least one DC lighting element (e.g. LED 810) of its associated lighting device (e.g. lighting device 1200), such as status information, feedback, or maintenance data (e.g. estimated remaining life of the DC lighting element). Processing unit 1210 provides the ability to manage any communications that may occur via communications interface 1112. Controller 400 of Figure 4, controller 500 of Figure 5, controller 600 of Figure 6, and controller 700 of Figure 7 are examples of controllers that are compatible with lighting device 1200.

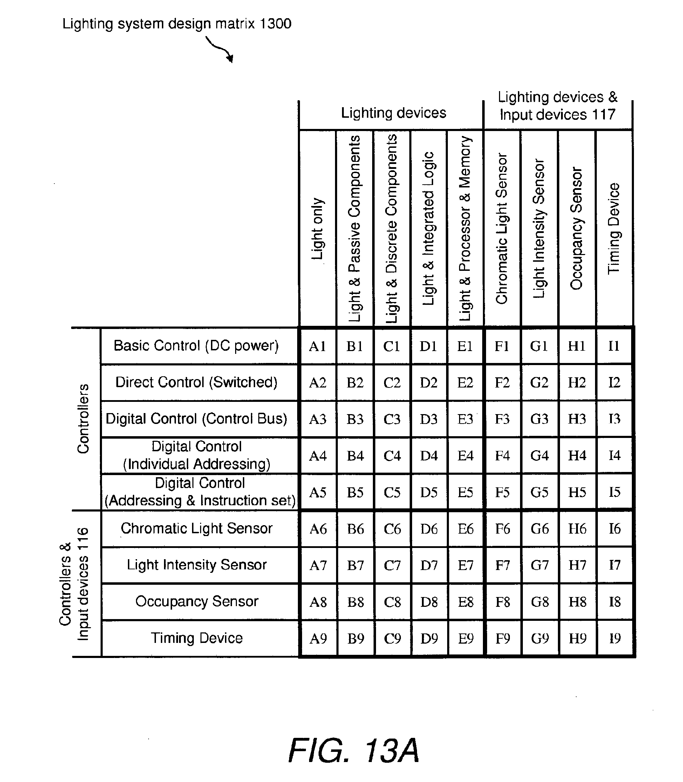

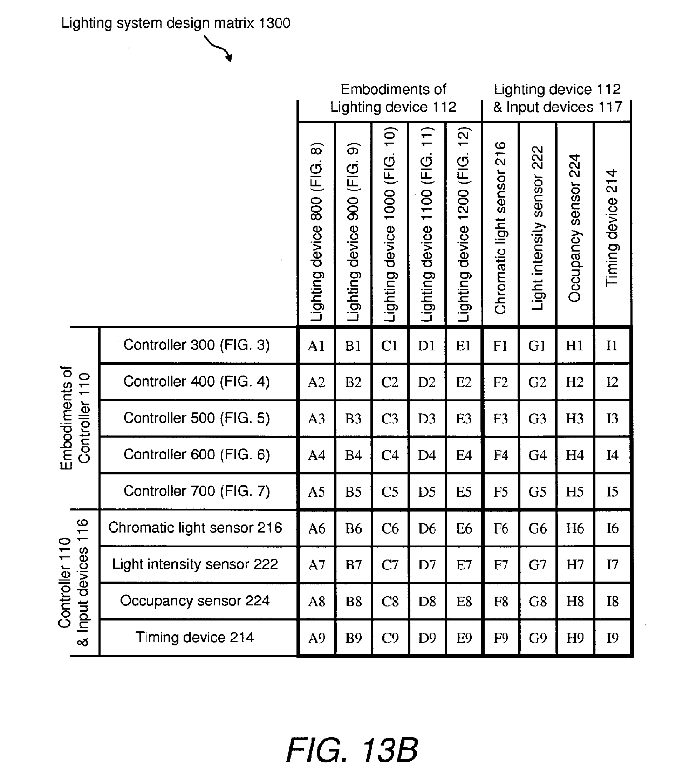

Figures 13A and 13B illustrate an example of a lighting system design matrix 1300 that shows examples of features and/or combinations of features that may be incorporated into control system 100.

As described in Figure 1, varying degrees of control and processing capabilities may be implemented in controller 110 and lighting devices 112. As a result, varying degrees of control and processing capabilities may be implemented into control system 100. To further illustrate, lighting system design matrix 1300 shows a visual representation of controllers having varying degrees of control and processing capabilities vs. lighting devices having varying degrees of control and processing capabilities. In particular, lighting system design matrix 1300 illustrates examples of combinations of different examples of controller 110, different examples of lighting devices 112, a sample of four input devices 116, and a sample of four input devices 117.

Referring again to Figures 13A and 13B, along one axis of lighting system design matrix 1300 are controller features along with a sample of four input devices 116 or 117. More specifically, along rows 1 through 9 of lighting system design matrix 1300 is the following controller features and input devices 116.

1 Basic Control (DC power) (e.g., controller 300 of Figure 3)

2 Direct Control (Switched) (e.g., controller 400 of Figure 4)

3 Digital Control (Control Bus) (e.g., controller 500 of Figure 5)

4 Digital Control (Individual Addressing) (e.g., controller 600 of Figure 6)

5 Digital Control (Addressing & Instruction set) (e.g., controller 700 of Figure 7)

6 Chromatic Light Sensor (e.g., chromatic light sensor 216)

7 Light Intensity Sensor (e.g., light intensity sensor 222)

8 Occupancy Sensor (e.g., occupancy sensor 224)

9 Timing Device (e.g., timing device 214)

Along the other axis of lighting system design matrix 1300 are lighting features along with the same sample of four input devices 116. More specifically, along columns A through I of lighting system design matrix 1300 is the following lighting features and input devices 117.

A. Light only (e.g., lighting device 800 of Figure 8)

B. Light & Passive Elements (e.g., lighting device 900 of Figure 9)

C. Light & Discrete Elements (e.g., lighting device 1000 of Figure 10)

D. Light & Integrated Logic (e.g., lighting device 1100 of Figure 11)

E. Light & Processor & Memory (e.g., lighting device 1200 of Figure 12)

F. Chromatic Light Sensor (e.g., chromatic light sensor 216)

G. Light Intensity Sensor (e.g., light intensity sensor 222)

H. Occupancy Sensor (e.g., occupancy sensor 224)

I. Timing Device (e.g., timing device 214)

With respect to lighting system design matrix 1300, the inclusion of a chromatic light sensor, a light intensity sensor, an occupancy sensor, and a timing device in combination with controllers and lighting devices is exemplary only and not meant to be limiting. For example, any one or more of input devices 116, 117 and/or any one or more of input systems 118 (see Figs. 2A, 2B) may be used in combination with controllers and lighting devices of control system 100 and may likewise be included in lighting system design matrix 1300.

Cells A1 through A5, B1 through B5, C1 through C5, D1 through D5, and E1 through E5 of lighting system design matrix 1300 may be considered the primary "intersections" of the controller features with the lighting features. Any remaining cells may be considered optional intersections. More specifically, cells F1 through F5, G1 through G5, H1 through H5, and I1 through I5 are the intersections of lighting features with the four sample input devices. Similarly, cells A6 through A9, B6 through B9, C6 through C9, D6 through D9, and E6 through E9 are the intersections of controller features with the four sample input devices 116. Additionally, cells F6 through F9, G6 through G9, H6 through H9, and I6 through I9 are the intersections of both the controller features and lighting features with the four sample input devices 116.

It is noted that certain cells (or intersections) may not be practical to implement. In one example, a certain example of the controller may not be able to support a certain example of the lighting device. In another example, certain input devices 112 may not be suitable for use with a certain example of the controller and/or a certain example of the lighting device. In other words, the use of lighting system design matrix 1300 may have a certain amount of dependency on cells (or intersections) that are compatible.

Lighting system design matrix 1300 may be useful for indicating certain design points and/or configurations of control system 100. For example, cell C1 indicates a control system 100 that includes the capability of a basic controller, such as controller 300 of Figure 3, in combination with a lighting device and discrete elements, such as lighting device 1000 of Figure 10. By then adding, for example, cells G1 and H1 to cell C1 of this configuration, control system 100 may be enhanced by the inclusion of a light intensity sensor and an occupancy sensor at the lighting device. By further adding, for example, cells C7, C8, and C9 to cells C1, G1, and H1 of this configuration, control system 100 may be further enhanced by the inclusion of a light intensity sensor, an occupancy sensor, and a timing device at the controller.

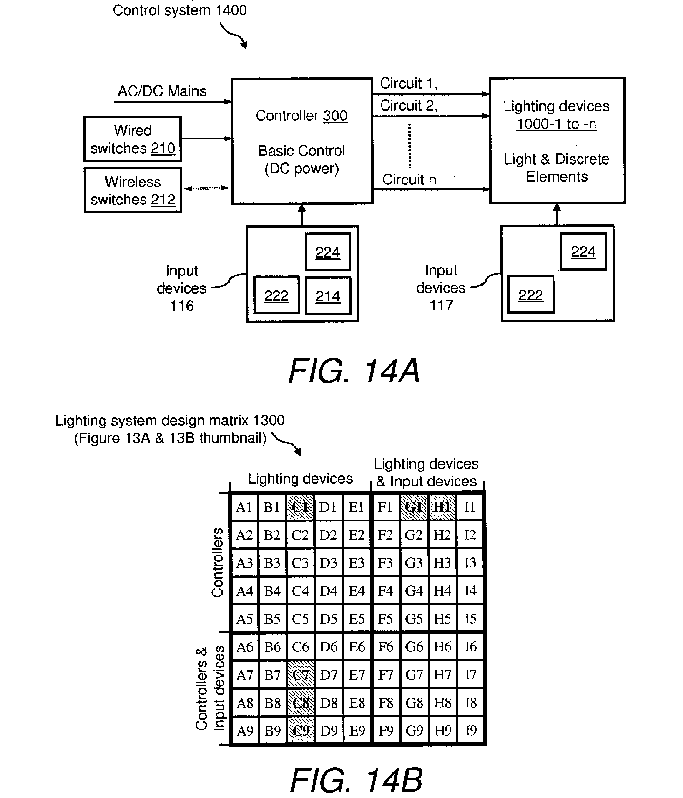

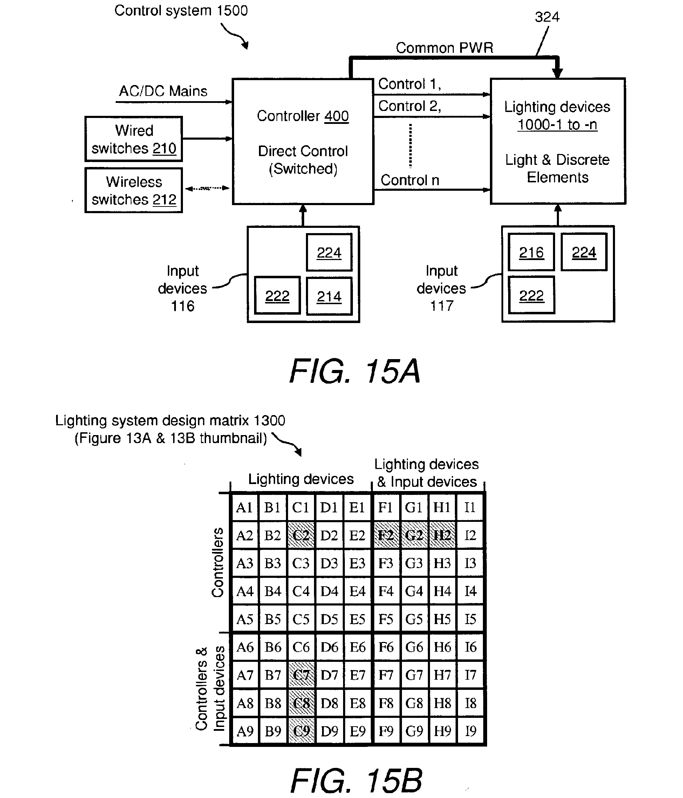

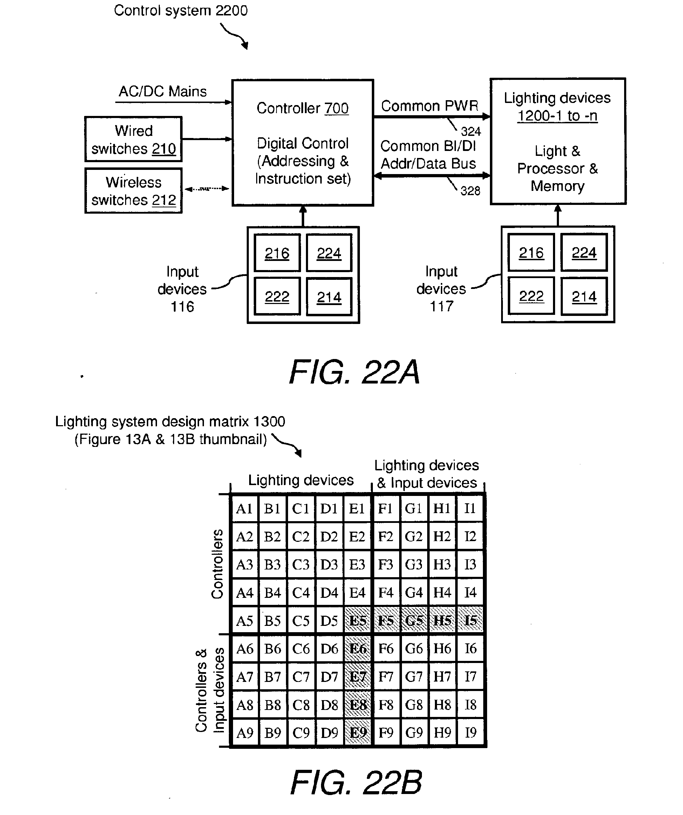

The above-described scenario is, in fact, shown with reference to Figures 14A and 14B. Subsequent Figures 15A and 15B through 22A and 22B show yet other examples of configurations of control system 100 that are based on certain compatible cells (or intersections) of lighting system design matrix 1300. In particular, Figures 14A and 14B through 22A and 22B illustrate examples of nine primary "intersections" of the controller features with the lighting features.

Figure 14A illustrates a functional block diagram of an example of a control system 1400 that includes controller 300 of Figure 3 and one or more lighting devices 1000 of Figure 10. Control system 1400 is one example of control system 100. Figure 14B illustrates lighting system design matrix 1300 of Figures 13A and 13B, highlighting the features included in control system 1400 of Figure 14A.

In this example, cell C1 indicates a control system 1400 that includes the capability of a basic controller that has switched power lines, such as controller 300 of Figure 3, which may be compatible with, for example, a light source with discrete components and integrated logic, such as lighting device 1000 of Figure 10.

Next, by adding, for example, any combinations of cells G1 and H1 to cell C1 of this configuration, control system 1400 may be enhanced by the inclusion of a light intensity sensor (e.g., light intensity sensor 222), an occupancy sensor (e.g., occupancy sensor 224), and any combination thereof as second input devices 117 at lighting devices 1000.

By further adding, for example, any combinations of cells C7, C8, and C9 to the above-mentioned cells of this configuration, control system 1400 may be further enhanced by the inclusion of a light intensity sensor (e.g., light intensity sensor 222), an occupancy sensor (e.g., occupancy sensor 224), a timing device (e.g., timing device 214), and any combinations thereof as first input devices 116 at controller 300.

Figure 15A illustrates a functional block diagram of an example of a control system 1500 that includes controller 400 of Figure 4 and one or more lighting devices 1000 of Figure 10. Control system 1500 is another example of control system 100. Figure 15B illustrates lighting system design matrix 1300 of Figures 13A and 13B, highlighting the features included in control system 1500 of Figure 14A.

In this example, cell C2 indicates a control system 1500 that includes the capability of a digital controller that has switched control lines, such as controller 400 of Figure 4, which may be compatible with, for example, a light source with discrete components and integrated logic, such as lighting device 1000 of Figure 10.

Next, by adding, for example, any combinations of cells F2, G2, and H2 to cell C2 of this configuration, control system 1500 may be enhanced by the inclusion of a chromatic light sensor (e.g., chromatic light sensor 216), a light intensity sensor (e.g., light intensity sensor 222), an occupancy sensor (e.g., occupancy sensor 224), and any combinations thereof as second input devices 117 at lighting devices 1000.

By further adding, for example, any combinations of cells C7, C8, and C9 to the above-mentioned cells of this configuration, control system 1500 may be further enhanced by the inclusion of a light intensity sensor (e.g., light intensity sensor 222), an occupancy sensor (e.g., occupancy sensor 224), a timing device (e.g., timing device 214), and any combinations thereof as first input devices 116 at controller 400.

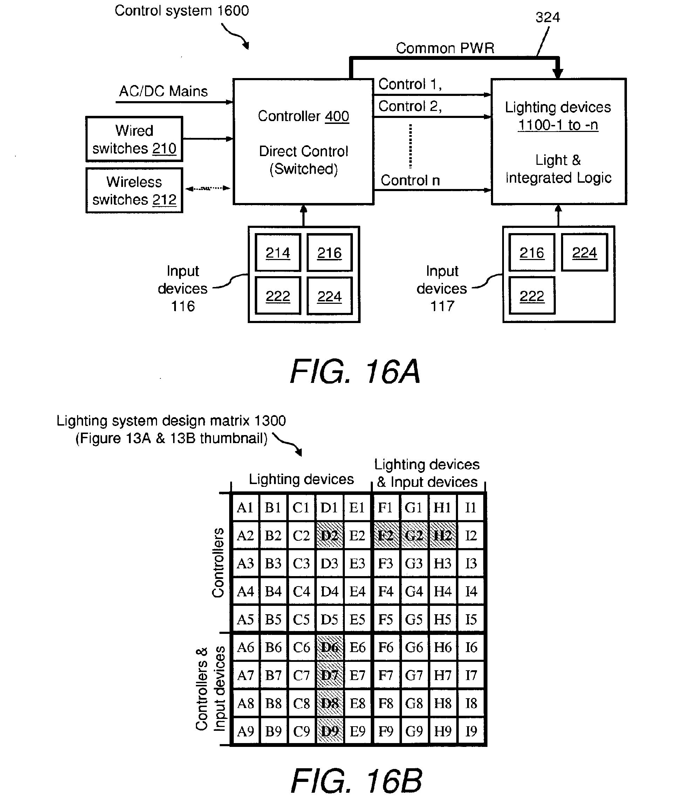

Figure 16A illustrates a functional block diagram of an example of a control system 1600 that includes controller 400 of Figure 4 and one or more lighting devices 1100 of Figure 11. Control system 1600 is yet another example of control system 100. Figure 16B illustrates lighting system design matrix 1300 of Figures 13A and 13B, highlighting the features included in control system 1600 of Figure 16A.

In this example, cell D2 indicates a control system 1600 that includes the capability of a digital controller that has switched control lines, such as controller 400 of Figure 4, which may be compatible with, for example, a light source with passive components, discrete components, and integrated logic, such as lighting device 1100 of Figure 11.

Next, by adding, for example, any combinations of cells F2, G2, and H2 to cell D2 of this configuration, control system 1600 may be enhanced by the inclusion of a chromatic light sensor (e.g., chromatic light sensor 216), a light intensity sensor (e.g., light intensity sensor 222), an occupancy sensor (e.g., occupancy sensor 224), and any combinations thereof as second input devices 117 at lighting devices 1100.

By further adding, for example, any combinations of cells D6, D7, D8, and D9, to the above-mentioned cells of this configuration, control system 1600 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 117 at controller 400.

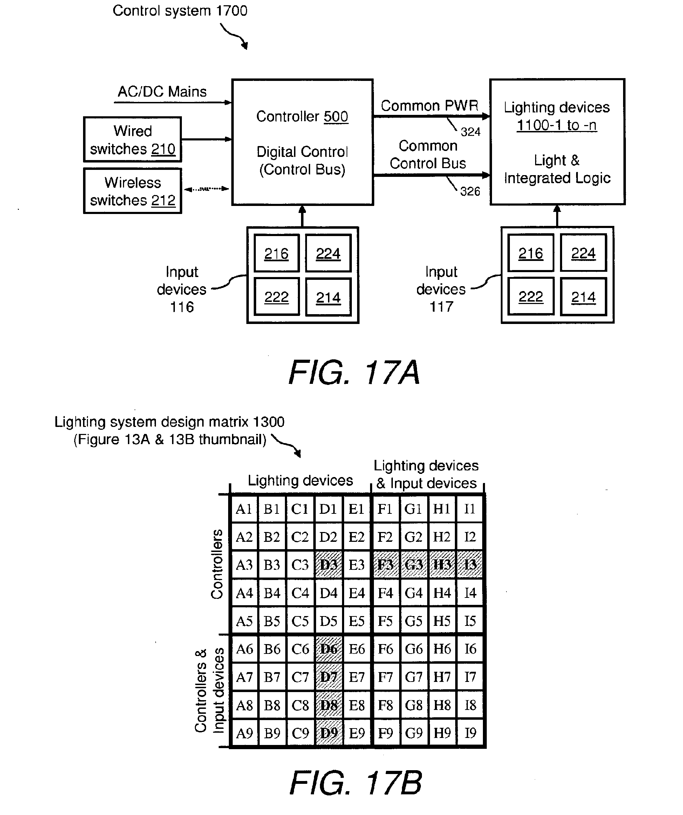

Figure 17A illustrates a functional block diagram of an example of a control system 1700 that includes controller 500 of Figure 5 and one or more lighting devices 1100 of Figure 11. Control system 1700 is yet another example of control system 100. Figure 17B illustrates lighting system design matrix 1300 of Figures 13A and 13B, highlighting the features included in control system 1700 of Figure 17A.

In this example, cell D3 indicates a control system 1700 that includes the capability of a digital controller that has some programmability and a custom control bus, such as controller 500 of Figure 5, which may be compatible with, for example, a light source with passive components, discrete components, and integrated logic, such as lighting device 1100 of Figure 11.

Next, by adding, for example, any combinations of cells F3, G3, H3, and I3 to cell D3 of this configuration, control system 1700 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices 117 at lighting devices 1100.

By further adding, for example, any combinations of cells D6, D7, D8, and D9, to the above-mentioned cells of this configuration, control system 1700 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 116 at controller 500.

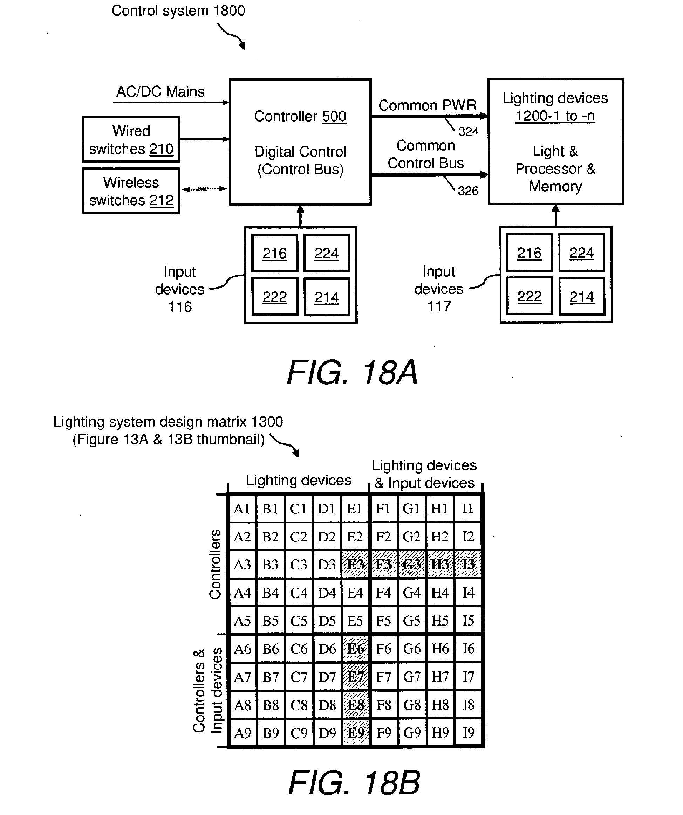

Figure 18A illustrates a functional block diagram of an example of a control system 1800 that includes controller 500 of Figure 5 and one or more lighting devices 1200 of Figure 12. Control system 1800 is yet another example of control system 100. Figure 18B illustrates lighting system design matrix 1300 of Figures 13A and 13B, highlighting the features included in control system 1800 of Figure 18A.

In this example, cell E3 indicates a control system 1800 that includes the capability of a digital controller that has some programmability and a custom control bus, such as controller 500 of Figure 5, which may be compatible with, for example, a light source with discrete components, processor and memory, such as lighting device 1200 of Figure 12.

Next, by adding, for example, any combinations of cells F3, G3, H3, and I3 to cell E3 of this configuration, control system 1800 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices 117 at lighting devices 1200.

By further adding, for example, any combinations of cells E6, E7, E8, and E9, to the above-mentioned cells of this configuration, control system 1800 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 116 at controller 500.

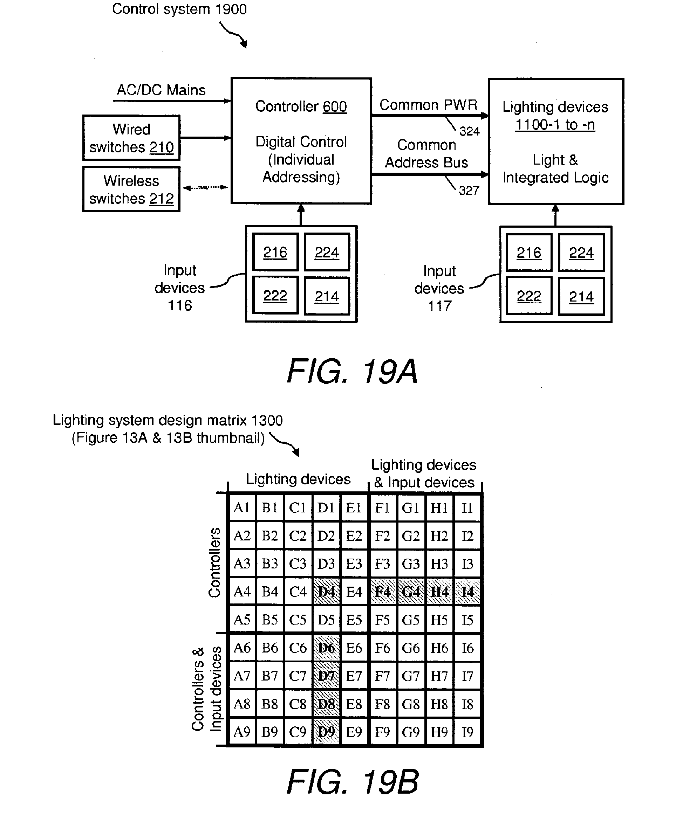

Figure 19A illustrates a functional block diagram of an example of a control system 1900 that includes controller 600 of Figure 6 and one or more lighting devices 1100 of Figure 11. Control system 1900 is yet another example of control system 100. Figure 19B illustrates lighting system design matrix 1300 of Figures 13A and 13B, highlighting the features included in control system 1900 of Figure 19A.

In this example, cell D4 indicates a control system 1900 that includes the capability of a digital controller that has full programmability and a standard unidirectional address bus, such as controller 600 of Figure 6, which may be compatible with, for example, a light source with passive components, discrete components, and integrated logic, such as lighting device 1100 of Figure 11.

Next, by adding, for example, any combinations of cells F4, G4, H4, and I4 to cell D4 of this configuration, control system 1900 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices 117 at lighting devices 1100.

By further adding, for example, any combinations of cells D6, D7, D8, and D9, to the above-mentioned cells of this configuration, control system 1900 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 116 at controller 600.

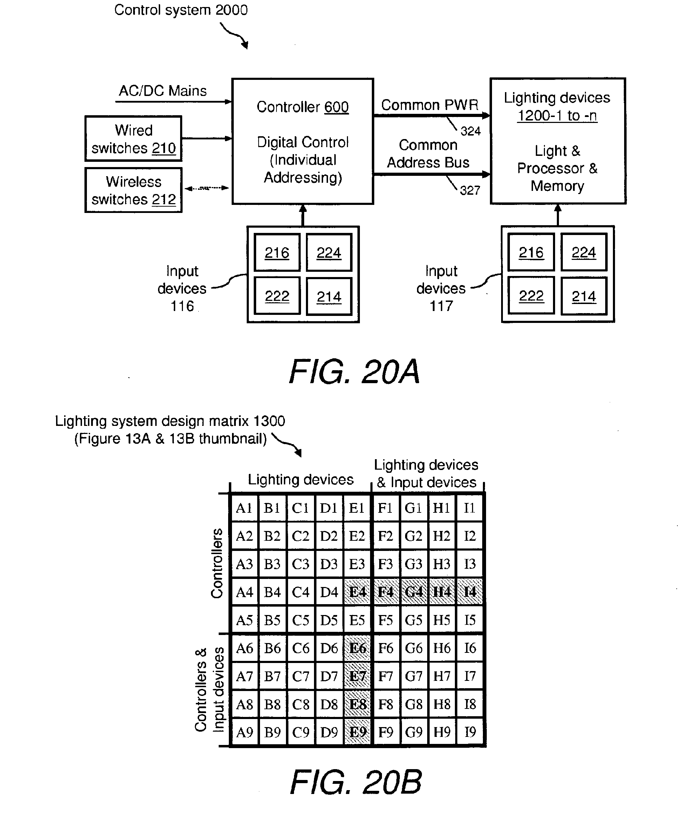

Figure 20A illustrates a functional block diagram of an example of a control system 2000 that includes controller 600 of Figure 6 and one or more lighting devices 1200 of Figure 12. Control system 2000 is yet another example of control system 100. Figure 20B illustrates lighting system design matrix 1300 of Figures 13A and 13B, highlighting the features included in control system 2000 of Figure 20A.

In this example, cell E4 indicates a control system 2000 that includes the capability of a digital controller that has full programmability and a standard unidirectional address bus, such as controller 600 of Figure 6, which may be compatible with, for example, a light source with discrete components, processor and memory, such as lighting device 1200 of Figure 12.

Next, by adding, for example, any combinations of cells F4, G4, H4, I4 to cell E4 of this configuration, control system 2000 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices at lighting devices 1200.

By further adding, for example, any combinations of cells E6, E7, E8, and E9, to the above-mentioned cells of this configuration, control system 2000 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices at controller 600.

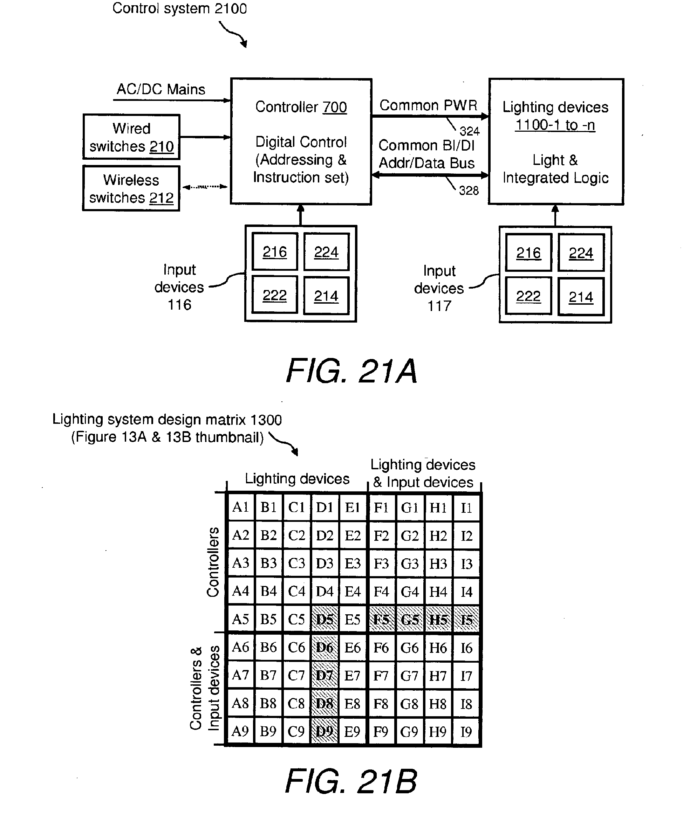

Figure 21A illustrates a functional block diagram of an example of a control system 2100 that includes controller 700 of Figure 7 and one or more lighting devices 1100 of Figure 11. Control system 2100 is yet another example of control system 100. Figure 21B illustrates lighting system design matrix 1300 of Figures 13A and 13B, highlighting the features included in control system 2100 of Figure 21A.

In this example, cell D5 indicates a control system 2100 that includes the capability of a digital controller that has full programmability and a standard bidirectional address/data bus 328, such as controller 700 of Figure 7, which may be compatible with, for example, a light source with passive components, discrete components, and integrated logic, such as lighting device 1100 of Figure 11.

Next, by adding, for example, any combinations of cells F5, G5, H5, I5 to cell D5 of this configuration, control system 2100 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices 117 at lighting devices 1100.

By further adding, for example, any combinations of cells D6, D7, D8, and D9, to the above-mentioned cells of this configuration, control system 2100 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 116 at controller 700.

Figure 22A illustrates a functional block diagram of an example of a control system 2200 that includes controller 700 of Figure 7 and one or more lighting devices 1200 of Figure 12. Control system 2200 is still another example of control system 100. Figure 22B illustrates lighting system design matrix 1300 of Figures 13A and 13B, highlighting the features included in control system 2200 of Figure 22A.

In this example, cell E5 indicates a control system 2200 that includes the capability of a digital controller that has full programmability and a standard bidirectional address/data bus, such as controller 700 of Figure 7, which may be compatible with, for example, a light source with discrete components, processor and memory, such as lighting device 1200 of Figure 12.

Next, by adding, for example, any combinations of cells F5, G5, H5, I5 to cell E5 of this configuration, control system 2200 may be enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as second input devices 117 at lighting devices 1200.

By further adding, for example, any combinations of cells E6, E7, E8, and E9, to the above-mentioned cells of this configuration, control system 2200 may be further enhanced by the inclusion of a chromatic light sensor (e.g., chromatic light sensor 216), a light intensity sensor (e.g., light intensity sensor 222), an occupancy sensor (e.g., occupancy sensor 224), a timing device (e.g., timing device 214), and any combinations thereof as first input devices 116 at controller 700.

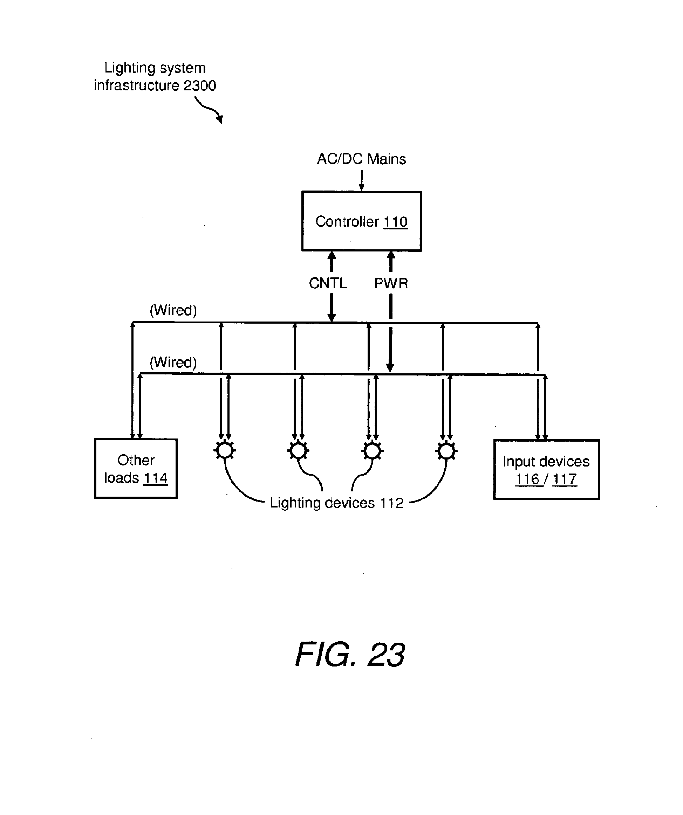

Figure 23 illustrates a functional block diagram of an example of a lighting system infrastructure 2300 of control system 100, which may be a substantially wired infrastructure that may include both wired power lines and wired control lines. In this example, lighting system infrastructure 2300 shows that the power from controller 110 to, for example, lighting devices 112, other loads 114, and input devices 116, 117 is connected in a wired fashion. Similarly, lighting system infrastructure 2300 shows that the controls lines (e.g., communications) between controller 110 and, for example, lighting devices 112, other loads 114, and input devices 116, 117 are also connected in a wired fashion.

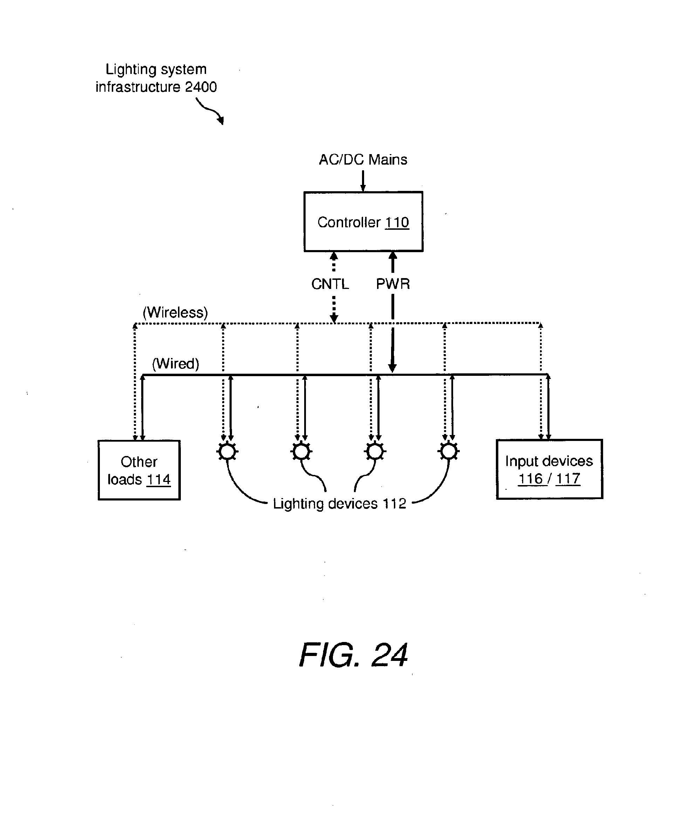

Figure 24 illustrates a functional block diagram of another example of a lighting system infrastructure 2400 of control system 100, which may be a combination wired and wireless infrastructure that may include, for example, wired power lines and wireless control lines. In this example, lighting system infrastructure 2400 shows that the power from controller 110 to, for example, lighting devices 112, other loads 114, and input devices 116, 117 is connected in a wired fashion. However, lighting system infrastructure 2400 shows that the controls lines (e.g., communications) between controller 110 and, for example, lighting devices 112, other loads 114, and input devices 116, 117 are connected in a wireless fashion.

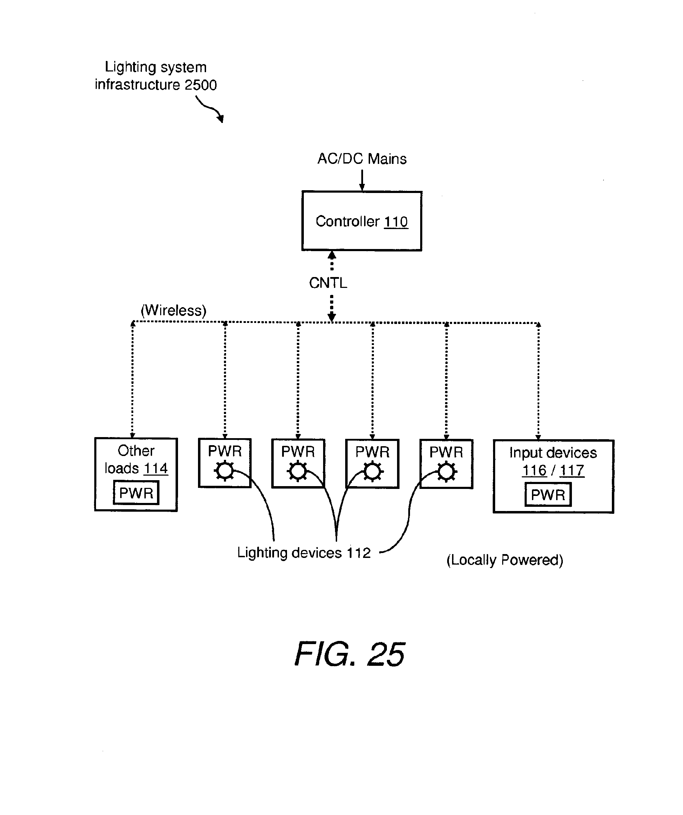

Figure 25 illustrates a functional block diagram of yet another example of a lighting system infrastructure 2500 of control system 100, which may be a substantially wireless infrastructure that may include, for example, battery powered components and wireless control lines. In this example, lighting system infrastructure 2500 shows that, for example, lighting devices 112, other loads 114, and input devices 116, 117 are powered locally (e.g., battery-powered or solar-powered). As a result, there is no physical power connection (i.e., power wiring) between these elements and controller 110. Lighting system infrastructure 2500 also shows that the controls lines (e.g., communications) between controller 110 and, for example, lighting devices 112, other loads 114, and input devices 116, 117 are connected in a wireless fashion.

Referring again to Figures 1 through 25, the examples of control system 100 may include the infrastructure of lighting system infrastructure 2300 of Figure 23, lighting system infrastructure 2400 of Figure 24, lighting system infrastructure 2500 of Figure 25, and any combinations thereof.

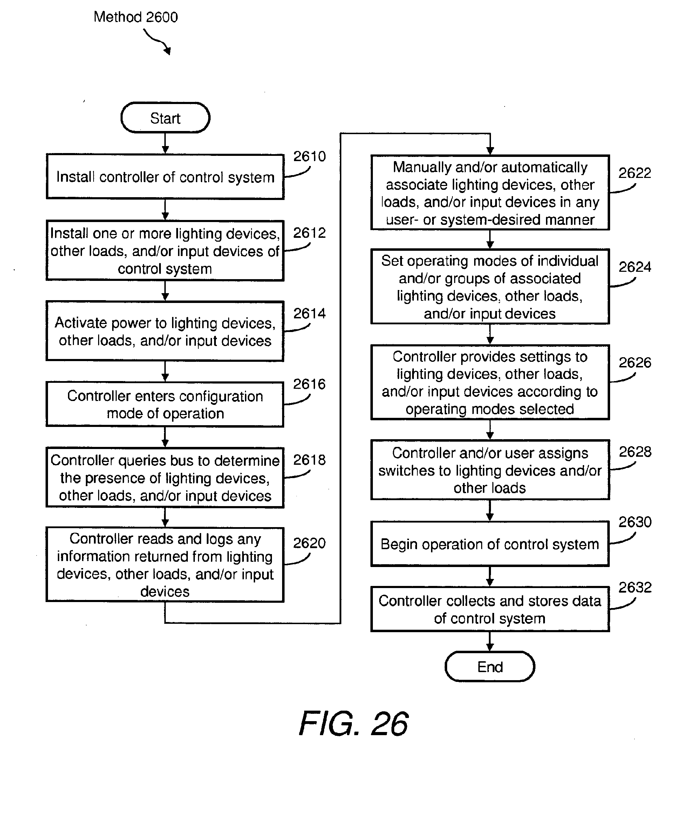

Figure 26 illustrates a flow diagram of an example of a method 2600 of installing, configuring, and operating control system 100. By way of example in method 2600, control system 100 is implemented as control system 2200 of Figure 22, which will be referenced throughout the steps of method 2600. Method 2600 may include, but is not limited to, the following steps, which may be implemented in any order.

At step 2610, controller 700 of control system 2200 is installed, for example, at a central location of a building structure or any other environment.

At step 2612, one or more lighting devices 1200, other loads 114, and/or input devices 116, 117 of control system 2200 are installed, for example, throughout the space of a building structure or any other environment. The installation of lighting devices 1200, other loads 114, and/or input devices 116, 117 with controller 700 may be, for example, according to lighting system infrastructure 2300 of Figure 23, lighting system infrastructure 2400 of Figure 24, lighting system infrastructure 2500 of Figure 25, and any combinations thereof.

At step 2614, power to lighting devices 1200, other loads 114, and/or input devices 116, 117 is activated. Step 2614 may include providing power from controller 700 or from a local source at the device (e.g., battery or solar power as shown in Fig. 25).

At step 2616, controller 700 enters a configuration mode of operation, which is a mode for configuring any lighting devices 1200, other loads 114, and/or input devices 116, 117 that may be associated therewith.

At step 2618, controller 700 queries the bidirectional address/data bus 328 to determine the presence of lighting devices 1200, other loads 114, and/or input devices 116, 117. For example, processing unit 1210 of each lighting device 1200 returns its unique address and/or unique serial number.

At step 2620, controller 700 reads and logs any information that is returned from lighting devices 1200, other loads 114, and/or input devices 116, 117. In one example, this information may include, but is not limited to, device type information, device capabilities information, device geo-location information, device status, etc. Of course, if the unidirectional bus 327 was used, steps 2618-2620 could be omitted.

At step 2622, lighting devices 1200, other loads 114, and/or input devices 116, 117 are associated with each other and controller 700 in any user- and/or system-desired manner. For example, the association may be by room, area, function, any user-defined group, any system-defined group, any logical group, and so on. This association may be accomplished manually by a user using a user interface and/or automatically by programming (e.g., according to a configuration file).

At step 2624, the operating modes of individual and/or groups of associated lighting devices 1200, other loads 114, and/or input devices 116, 117 are set. The operating modes may be set manually by a user using a user interface and/or automatically by programming (e.g., according to a configuration file), for example. Examples of various operating modes may include, but are not limited to, the following:

1 Eco mode - reduce the amount of energy supplied to the load without perceptible light level change;

2 Motion monitored auto-OFF mode - automatically controls loads based on occupancy;

3 Daylight harvesting mode - automatically dim down the light level during the day to maintain a constant light level in a room;

4 Scene mode - allows different configurations of light levels to be programmed as "scenes" (e.g., party scene, reading scene, dining scene, etc);

5 Vacation mode - adjusts lighting/loads for a planned extended absence (i.e., for energy conservation and minimizing risk of intrusion);

6 Chromatherapy mode - color changing for RGB LEDs;

7 PDA enabled mode - allows instructions to be received from a smart mobile device;

8 Security mode - checks for and/or maintains a certain security level for minimizing risk of damage and/or intrusion (i.e., locked doors and windows, certain lighting levels, etc);

9 Economy mode - optimization for minimizing the cost of operating the system;

10 Utility-enabled demand/response mode - allow utilities (e.g. utility companies) to monitor and/or control the use of power in the system;

11 HVAC control mode - allows HVAC to be controlled, for example, upon detecting opened doors or windows;

12 Home mode - adjusts lighting/loads for normal occupancy;

13 Away mode - adjusts lighting/loads for short absence; and

14 Weekend mode - adjusts lighting/loads for weekend occupancy, which may vary from weekday occupancy.

At step 2626, using the bidirectional address/data bus 328, controller 700 provides settings to lighting devices 1200, other loads 114, and/or input devices 116, 117 according to operating modes selected. Settings may include, but are not limited to, dimming levels, illumination levels, color temperature levels, auto-OFF delay time settings, color settings (for RGB LEDs), scene settings, channel ganging settings to handle heavy wattage load, fan settings (e.g., fan speed and direction), day lighting settings, delay on/off settings, timed out (bedtime) settings, gas flow and/or volume settings, water flow and/or temperature settings, and the like.

At step 2628, controller 700 and/or a user assigns, for example, wired switches 210 and/or wireless switches 212 to individual and/or groups of lighting devices 1200 and/or other loads 114.

At step 2630, the operation of control system 2200 begins.

At step 2632, at certain time intervals, such as every 24 hours, controller 700 collects and stores data of control system 2200.

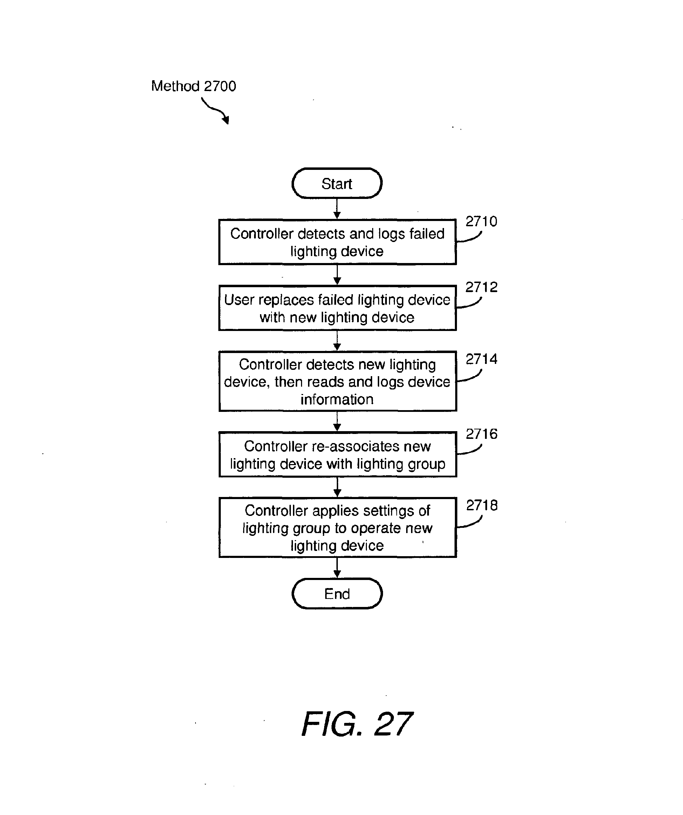

Figure 27 illustrates a flow diagram of an example of a method 2700 of installing and configuring a replacement lighting device in control system 100. By way of example in method 2700, control system 100 is implemented as control system 2200 of Figure 22, which will be referenced throughout the steps of method 2700. Method 2700 may include, but is not limited to, the following steps, which may be implemented in any order.

At step 2710, controller 700 detects and logs the failed lighting device 1200 (e.g. using current sensors connected to bidirectional address/data bus 328).

At step 2712, a user replaces the failed lighting device 1200 with a new lighting device 1200.

At step 2714, controller 700 detects the new lighting device 1200, then reads and logs its device information, such as its device serial number, device type information, device capabilities information, device geo-location information, etc. (e.g. via bidirectional address/data bus 328).

At step 2716, controller 700 re-associates new lighting device 1200 with the lighting group (if any) of the failed lighting device 1200.

At step 2718, controller 700 applies the settings of the lighting group (if any) to operate the new lighting device 1200.

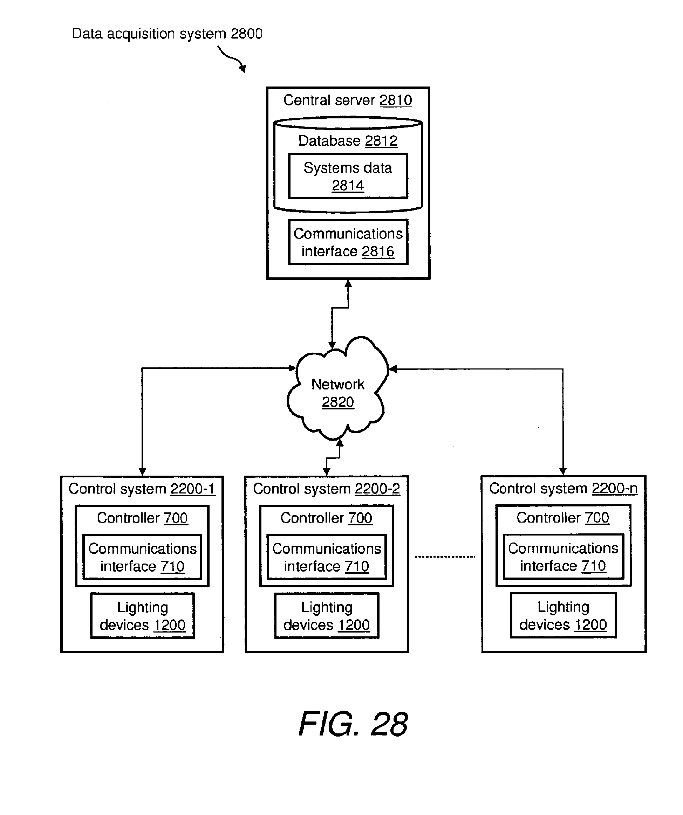

Figure 28 illustrates a function block diagram of an example of a data acquisition system 2800, which is a network of control systems 100. With respect to data acquisition system 2800, by way of example control system 100 is implemented as control system 2200 of Figure 22.

In one example, data acquisition system 2800 includes a central server 2810, which may the central server associated with, for example, the manufacturer, supplier, and/or installer of the control systems. In another example, central server 2810 may include the central server associated with an electric utility company. Central server 2810 may include a database 2812 for storing a collection of systems data 2814. Central server 2810 also includes a communications interface 2816 for communicating with a network, such as a network 2820.

Communications interface 2816 may include any wired and/or wireless communications interface that is suitable for connecting to a network, such as network 2820. Examples of wired communications interfaces may include, but are not limited to, USB ports, RS232 connectors, RJ45 connectors, Ethernet, and any combinations thereof. Examples of wireless communications interfaces may include, but are not limited to, an Intranet connection, Internet, Bluetooth® technology, Wi-Fi, Wi-Max, IEEE 802.11 technology, radio frequency (RF), Infrared Data Association (IrDA) compatible protocols, Local Area Networks (LAN), Wide Area Networks (WAN), Shared Wireless Access Protocol (SWAP), any combinations thereof, and other types of wireless networking protocols.

Systems data 2814 that is stored at database 2812 at central server 2810 may include any information that is collected from one or more control systems 2200, such as control systems 2200-1 through 2200-n. Controller 700 of each control system 2200 includes a communications interface 710, which is substantially the same as communications interface 2816 of central server 2810. By use of communications interfaces 710, control systems 2200-1 through 2200-n may connect to network 2820.

In operation, each of control systems 2200-1 through 2200-n may continuously collect information about its use and/or operation. Control systems 2200-1 through 2200-n may periodically transmit (e.g., daily, weekly, monthly, etc.) their systems data to central server 2810, for storage in systems data 2814 at database 2812.

Systems data 2814 may include, but is not limited to, power consumption data, lighting/loads usage data, lighting/loads state change data, and the like. Systems data 2814 may be useful, for example, to indicate energy/resource profiles to utilities and/or manufacturers; to support services/products, verification, and maintenance of systems (e.g., HVAC, appliances, etc); to indicate load on the home by the inhabitants as well as lifestyle (personal carbon footprint analysis); to detect imbalance such as water/sewage (leak in the main feeding the home). Systems data 2814 may be useful for selling or otherwise providing to consumers, utility companies, marketing firms for manufacturers, and the like.

In summary and referring to Figures 1 through 28, because the various examples of control system 100 are based on low voltage DC, the various examples of control system 100 may reduce, or even entirely eliminate, the need for specially trained installation and/or maintenance personnel. Further, the various examples of control system 100 may reduce, or entirely eliminate, the disadvantages associated with high voltage AC power circuits.

Again, because the various examples of control system 100 are based on low voltage DC, the various examples of control system 100 may reduce energy consumption or costs as compared with standard high voltage AC lighting systems.

Further, the various examples of control system 100 provide a more flexible infrastructure (e.g., lighting system infrastructure 2300 of Figure 23, lighting system infrastructure 2400 of Figure 24, lighting system infrastructure 2500 of Figure 25, and any combinations thereof) that may reduce the cost and complexity of installation, maintenance, and upgrades and/or modifications as compared with standard high voltage AC lighting systems.

Further, the various examples of control system 100 provide improved configurations and control, such as by physical, logical, and/or functional associations (e.g., zones 120).

Further, the various examples of control system 100 provide, for example, flexible configurations, improved programmability, improved automation, adjustable light patterns, adjustable colors (or shades), adjustable light levels, and/or adjustable timing. This may be achieved by, for example, using partially or fully programmable controllers and/or lighting devices. Examples of partially or fully programmable controllers are controller 500 of Figure 5, controller 600 of Figure 6, and controller 700 of Figure 7. Examples of partially or fully programmable lighting devices are lighting device 1100 of Figure 11 and lighting device 1200 of Figure 12.

Further, the various examples of control system 100 provide ways of integrating lighting systems with other devices (e.g., input devices 116, 117) and/or systems (e.g., input systems 118).

## Claims

1. A low voltage control system (100, 1400), comprising:
a controller (110, 300) having a plurality of switched power lines (power 1 ... power n) that provide DC power;
a plurality of DC lighting loads (1000-1 ... 1000-n), each DC lighting load including at least one DC lighting element (810), each DC lighting load having an associated switch downstream from the controller that selectively connects the at least one DC lighting element to one of the plurality of switched power lines;
at least one first input device (116) including at least one of an occupancy sensor, a light intensity sensor, or a programmable digital timer, wherein the controller selectively powers the switched power lines in response to sensor data received from the at least one first input device or commands received from at least one wired (210) or wireless (212) switch in communication with the controller; and
at least one second input device (117) including at least one of a light intensity sensor or an occupancy sensor, the at least one second input device controlling the associated switches of the DC lighting loads to selectively connect and disconnect the plurality of DC lighting loads from the switched power lines independently of the controller.

2. The system of claim 1, wherein the at least one wired or wireless switch includes at least one energy-harvesting switch operable to transmit wireless control signals using only energy harvested by the switch.

3. The system of claim 1, the system further including at least one DC non-lighting load (114), each of the at least one DC non-lighting loads being connected to one of the switched power lines via an associated switch, the associated switch being responsive to sensor data from the at least one second input device, wherein the at least one non-lighting load includes at least one of a miniature motor for opening and closing motorized window blinds, a decorative ceiling fan, a concealed ventilation fan, a zoned HVAC duct control, a window tinting device, a powered window, a central vacuum, an actuator for opening a cabinet, an actuator for locking a cabinet, or a solenoid or motorized valve turning water ON or OFF in a faucet, shower, or tub.

4. The system of claim 1, wherein the at least one DC lighting element includes at least one of a LED-based lighting device, an OLED-based lighting device, an electroluminescent printed sheet, or a light-emitting plasma bulb, wherein the LED-based lighting device includes particularly at least one RGB LED capable of producing light of varying colors.

5. The system of claim 1, wherein the at least one first input device or the at least one second input device also include at least one of a security system, an HVAC system, a garage door system, a telephone system, an intercom system, an entertainment system, a cable television system or an appliance system.

6. The system of claim 1, wherein the controller includes:
a power conditioning module (310) for receiving a power input, wherein the power conditioning module includes at least one of an AC-to-DC converter circuit, a DC-DC converter circuit, a voltage regulator circuit, a current limiting circuit, or an over-voltage protection circuit.

7. The system of claim 1, wherein the controller includes at least one DC power circuit (312) operable to control when the controller powers the switched power lines, wherein the controller includes particularly one DC power circuit per switched power line.

8. The system of claim 1, wherein the controller includes: a communications interface (316) transmitting signals between the controller and at least one of an external computing device (320) or a network (322), wherein the communications interface includes particularly at least one of a USB port, a RS232 connector, a RJ45 connector, a Bluetooth module, an IEEE 802.11 module, a radio frequency module, or an Infrared Data Association module.

9. The system of claim 1, wherein the controller includes an integrated user interface device (318) for configuring the controller, the integrated user interface device including at least one of a video display, a touch screen, a keypad, a keyboard, a mouse, at least one push button, at least one dial, or at least one toggle switch.

10. The system of claim 1, wherein the occupancy sensor includes a passive infrared motion detector operable to turn ON a selected one or more of the plurality of DC lighting loads in response to detecting occupant presence, and operable to turn OFF the selected one or more of the plurality of DC lighting loads in response to not detecting occupant presence for a predefined period of time.

11. The system of claim 1, wherein the light intensity sensor is operable to detect intensity levels of the plurality of DC lighting loads, and is operable to adjust the light intensity of the DC lighting loads in response to the detected intensity levels being greater than or less than a predefined intensity threshold.

12. The system of claim 1, wherein the programmable digital timer is operable to turn the associated switch of one or more of the plurality of DC lighting loads ON or OFF at any predefined time.

13. A method of controlling a low voltage load, comprising:
providing a controller having a plurality of switched power lines that provide DC power;
providing a plurality of DC lighting loads, each DC lighting load including at least one DC lighting element, each DC lighting load having an associated switch downstream from the controller that selectively connects the at least one DC lighting element to one of the plurality of switched power lines;
providing at least one first input device including at least one of an occupancy sensor, a light intensity sensor, or a timing device, wherein the controller selectively powers the switched power lines in response to sensor data received from the at least one first input device or commands received from at least one wired or wireless switch in communication with the controller;
providing at least one second input device including at least one of a light intensity sensor or an occupancy sensor, the at least one second input device controlling the associated switches of the DC lighting loads to selectively connect and disconnect the plurality of DC lighting loads from the switched power lines;
receiving a controller operating mode selection;
receiving an association between a selected one of the plurality of DC lighting loads, a selected first input device, and a selected second input device; and
selectively powering the selected DC lighting load via its associated switched power line in response to sensor data received from the assigned first input device or assigned second input device, with the controller operating in the selected operating mode.

14. The method of claim 13, wherein the operating mode is one of an eco-mode in which the controller reduces the amount of power consumed by the DC lighting loads without perceptible light level change, a motion monitored auto-OFF mode in which the controller is operable to turn OFF selected DC lighting loads in response to a lack of detected motion, a scene mode in which the controller is operable to illuminate selected DC lighting loads in one or more predefined scenes, a vacation mode in which the controller controls the DC lighting loads to give an impression of human presence, or a chromatherapy mode in which the controller controls the DC lighting loads to provide desired predefined lighting colors.

15. The method of claim 13, wherein the commands from the assigned first input device and assigned second input device include at least one of a dimming level, an illumination level, a color temperature level, an auto-OFF delay time, a color setting for a RGB LED, a scene setting, a fan setting, a day lighting setting, a delay ON/OFF setting, or a timed out setting.

## Patentansprüche

1. Niederspannungssteuersystem (100, 1400) mit:
einem Steuerglied (110, 300), das mehrere geschaltete Stromleitungen (Power 1 ... Power n) aufweist, die Gleichstrom bereitstellen;
mehreren Beleuchtungs-Gleichstromverbrauchern (1000-1 ... 1000-n), wobei jeder Beleuchtungs-Gleichstromverbraucher mindestens ein Gleichstrom-Beleuchtungselement (810) aufweist, wobei jeder Beleuchtungs-Gleichstromverbraucher dem Steuerglied nachgeschaltet einen zugehörigen Schalter aufweist, der wahlweise das mindestens eine Gleichstrom-Beleuchtungselement an einen von den mehreren geschalteten Stromleitungen anschließt;
mindestens einer ersten Eingabevorrichtung (116), die einen Anwesenheitssensor und/oder einen Lichtintensitätssensor und/oder einen programmierbaren digitalen Zeitgeber aufweist, wobei das Steuerglied in Reaktion auf Sensordaten, die von der mindestens einen ersten Eingabevorrichtung erhalten wurden, oder auf Anweisungen, die aus mindestens einem drahtgebundenen (210) oder drahtlosen (212) Schalter in Verbindung mit dem Steuerglied erhalten wurden, wahlweise die geschalteten Stromleitungen mit Strom versorgt; und
mindestens einer zweiten Eingabevorrichtung (117), die einen Lichtintensitätssensor und/oder einen Anwesenheitssensor aufweist, wobei die mindestens eine zweite Eingabevorrichtung die zugehörigen Schalter der Beleuchtungs-Gleichstromverbraucher steuert, um unabhängig vom Steuerglied die mehreren Beleuchtungs-Gleichstromverbraucher wahlweise an die geschalteten Stromleitungen anzuschließen und von ihnen zu trennen.

2. System nach Anspruch 1, wobei der mindestens eine drahtgebundene oder drahtlose Schalter mindestens einen Energie abschöpfenden Schalter aufweist, der in der Lage ist, drahtlose Steuersignale zu übertragen, wobei nur die durch den Schalter abgeschöpfte Energie verwendet wird.

3. System nach Anspruch 1, wobei das System ferner mindestens einen Nichtbeleuchtungs-Gleichstromverbraucher (114) aufweist, wobei jeder von dem mindestens einen Nichtbeleuchtungs-Gleichstromverbraucher über einen zugehörigen Schalter an eine der geschalteten Stromleitungen angeschlossen ist, wobei der zugehörige Schalter auf Sensordaten aus der mindestens einen zweiten Eingabevorrichtung anspricht, wobei der mindestens eine Nichtbeleuchtungsverbraucher zumindest eines von folgendem aufweist: ein Kleinstmotor zum Öffnen und Schließen motorbetriebener Fensterjalousien, ein dekorativer Deckenventilator, ein verdeckter Lüftungsventilator, eine Bereichsklimatechnik-Kanalsteuerung, eine Fensterabtönungsvorrichtung, ein energiegespeistes Fenster, ein Zentralstaubsauger, ein Antrieb zum Öffnen eines Schranks, ein Antrieb zum Schließen eines Schranks und/oder eine Magnetspule oder ein motorbetriebenes Ventil zum an- oder abschalten von Wasser in einem Wasserhahn, einer Dusche oder einer Badewanne.

4. System nach Anspruch 1, wobei das mindestens eine Gleichstrom-Beleuchtungselement zumindest eines von folgendem aufweist: eine Beleuchtungsvorrichtung auf LED-Basis, eine Beleuchtungsvorrichtung auf OLED-Basis, ein Elektrolumineszenzdruckbogen und/oder eine Lichtemissions-Plasmaröhre; wobei die Beleuchtungsvorrichtung auf LED-Basis insbesondere mindestens eine RGB-LED aufweist, die zum Erzeugen von Licht unterschiedlicher Farben geeignet ist.

5. System nach Anspruch 1, wobei die mindestens eine erste Eingabevorrichtung oder die mindestens eine zweite Eingabevorrichtung auch zumindest eines von folgendem aufweist: ein Sicherheitssystem, ein Klimatechniksystem, ein Garagentürsystem, ein Telefonsystem, ein Wechselsprechanlagensystem, ein Unterhaltungssystem, ein Kabelfernsehsystem und/oder ein Gerätesystem.

6. System nach Anspruch 1, wobei das Steuerglied aufweist:
ein Stromwandlermodul (310) zur Aufnahme eines Stromeingangs, wobei das Stromwandlermodul zumindest eines von folgendem aufweist: eine Wechselstrom-Gleichstromwandlerschaltung, eine Gleichstromwandlerschaltung, eine Spannungsreglerschaltung, eine Strombegrenzungsschaltung und/oder eine Überspannungsschutzschaltung.

7. System nach Anspruch 1, wobei das Steuerglied mindestens eine Gleichstromschaltung (312) aufweist, die in der Lage ist zu steuern, wann das Steuerglied die geschalteten Stromleitungen mit Strom versorgt, wobei das Steuerglied insbesondere eine Gleichstromschaltung pro geschaltete Stromleitung aufweist.

8. System nach Anspruch 1, wobei das Steuerglied aufweist: eine Kommunikationsschnittstelle (316), die Signale zwischen dem Steuerglied und einer externen Rechneranlage (320) und/oder einem Netzwerk (322) überträgt, wobei die Kommunikationsschnittstelle insbesondere zumindest eines von folgendem aufweist: ein USB-Anschluss, ein RS232-Verbinder, ein RJ45-Verbinder, ein Bluetooth-Modul, ein Modul IEEE 802.11, ein Funkfrequenzmodul und/oder ein Infrared-Data-Association-Modul.

9. System nach Anspruch 1, wobei das Steuerglied eine integrierte Nutzerschnittstellenvorrichtung (318) zum Konfigurieren des Steuerglieds aufweist, wobei die integrierte Nutzerschnittstellenvorrichtung zumindest eines von folgendem aufweist: eine Bildanzeige, einen berührungsempfindlichen Bildschirm, eine Folientastatur, eine Tastatur, eine Maus, mindestens eine Drucktaste, mindestens eine Wählscheibe und/oder mindestens einen Kipphebelschalter.

10. System nach Anspruch 1, wobei der Anwesenheitssensor einen passiven Infrarot-Bewegungsdetektor umfasst, der in der Lage ist, eine oder mehrere ausgewählte von den mehreren Beleuchtungs-Gleichstromverbrauchern in Reaktion auf das Erfassen der Anwesenheit eines Bewohners anzuschalten, und in der Lage ist, den ausgewählten einen oder die ausgewählten mehreren von den mehreren Beleuchtungs-Gleichstromverbrauchern in Reaktion darauf, dass die Anwesenheit eines Bewohners nicht erfasst wurde, für eine vorgegebene Zeitspanne auszuschalten.

11. System nach Anspruch 1, wobei der Lichtintensitätssensor in der Lage ist, Intensitätspegel der mehreren Beleuchtungs-Gleichstromverbraucher zu erfassen, und in der Lage ist, die Lichtintensität der Beleuchtungs-Gleichstromverbraucher in Reaktion darauf, dass die erfassten Intensitätspegel größer oder kleiner als ein vorgegebener Intensitätsschwellenwert sind, anzupassen.

12. System nach Anspruch 1, wobei der programmierbare digitale Zeitgeber in der Lage ist, den zugehörigen Schalter von einem oder mehreren der mehreren Beleuchtungs-Gleichstromverbraucher zu irgendeiner vorgegebenen Zeit an- oder auszuschalten.

13. Verfahren zum Steuern eines Niederspannungsverbrauchers, umfassend:
Bereitstellen eines Steuerglieds, das mehrere geschaltete Stromleitungen aufweist, die Gleichstrom bereitstellen;
Bereitstellen von mehreren Beleuchtungs-Gleichstromverbrauchern, wobei jeder Beleuchtungs-Gleichstromverbraucher mindestens ein Gleichstrom-Beleuchtungselement aufweist, wobei jeder Beleuchtungs-Gleichstromverbraucher dem Steuerglied nachgeschaltet einen zugehörigen Schalter aufweist, der wahlweise das mindestens eine Gleichstrom-Beleuchtungselement an eine von den mehreren geschalteten Stromleitungen anschließt; Bereitstellen mindestens einer ersten Eingabevorrichtung, die einen Anwesenheitssensor und/oder einen Lichtintensitätssensor und/oder eine Zeitgebervorrichtung aufweist, wobei das Steuerglied in Reaktion auf Sensordaten, die von der mindestens einen ersten Eingabevorrichtung erhalten wurden, oder auf Anweisungen, die aus mindestens einem drahtgebundenen oder drahtlosen Schalter in Verbindung mit dem Steuerglied erhalten wurden, wahlweise die geschalteten Stromleitungen mit Strom versorgt; und
Bereitstellen mindestens einer zweiten Eingabevorrichtung, die einen Lichtintensitätssensor und/oder einen Anwesenheitssensor aufweist, wobei die mindestens eine zweite Eingabevorrichtung die zugehörigen Schalter der Beleuchtungs-Gleichstromverbraucher steuert, um die mehreren Beleuchtungs-Gleichstromverbraucher wahlweise an die geschalteten Stromleitungen anzuschließen und von ihnen zu trennen;
Empfangen einer Steuerglied-Betriebsartenauswahl;
Empfangen einer Verknüpfung zwischen einem ausgewählten von den mehreren Beleuchtungs-Gleichstromverbrauchern, einer ausgewählten ersten Eingabevorrichtung und einer ausgewählten zweiten Eingabevorrichtung; und
wahlweise Stromversorgung des ausgewählten Beleuchtungs-Gleichstromverbrauchers über seine zugehörige geschaltete Stromleitung in Reaktion auf Sensordaten, die von der zugewiesenen ersten Eingabevorrichtung oder der zugewiesenen zweiten Eingabevorrichtung empfangen wurden, wobei das Steuerglied in der ausgewählten Betriebsart arbeitet.

14. Verfahren nach Anspruch 13, wobei die Betriebsart eine Öko-Betriebsart, in der das Steuerglied ohne eine wahrnehmbare Lichtpegeländerung die Höhe der Leistung verringert, die von den Beleuchtungs-Gleichstromverbrauchern verbraucht wird; eine bewegungsüberwachte Selbstabschaltungsbetriebsart, in der das Steuerglied in der Lage ist, ausgewählte Beleuchtungs-Gleichstromverbraucher in Reaktion auf das Fehlen einer erfassten Bewegung auszuschalten; eine Szenenbetriebsart, in der das Steuerglied in der Lage ist, ausgewählte Beleuchtungs-Gleichstromverbraucher in einer oder mehreren vorgegebenen Szenen auszuleuchten; eine Ferienbetriebsart, in der das Steuerglied die Beleuchtungs-Gleichstromverbraucher so steuert, dass sie den Eindruck der Anwesenheit einer Person vermitteln; oder eine Chromatherapie-Betriebsart, in der das Steuerglied die Beleuchtungs-Gleichstromverbraucher steuert, um gewünschte vorgegebene Beleuchtungsfarben bereitzustellen, ist.

15. Verfahren nach Anspruch 13, wobei die Anweisungen von der zugewiesenen ersten Eingabevorrichtung und der zugewiesenen zweiten Eingabevorrichtung zumindest eines von folgendem aufweist: eine Abdunkelungsstufe, eine Beleuchtungsstufe, eine Farbtemperaturstufe, eine Selbstabschaltungs-Verzögerungszeit, eine Farbeinstellung für eine RGB-LED, eine Szeneneinstellung, eine Lüftereinstellung, eine Tageslichteinstellung, eine AN/AUS-Verzögerungseinstellung und/oder eine Zeitüberschreitungseinstellung.

## Revendications

1. Système de commande basse tension (100, 1400) comprenant :
- une unité de commande (110, 300) comprenant plusieurs lignes électriques commutées (POWER1, ..., POWERm) qui produisent une électricité CC ;
- plusieurs charges d'éclairage CC (1000-1, ..., 1000-m), chaque charge d'éclairage CC comprenant au moins un élément d'éclairage CC (810), et chaque charge d'éclairage CC comprenant un commutateur associé en aval de l'unité de commande qui connecte sélectivement ledit au moins un élément d'éclairage CC à une desdites plusieurs lignes électriques commutées ;
- au moins un premier dispositif d'entrée (116) comprenant l'un au moins d'un détecteur de présence, d'un détecteur d'intensité lumineuse ou d'un temporisateur numérique programmable, l'unité de commande alimentant sélectivement les lignes électriques commutées en réponse à des données de détecteur reçues dudit au moins un premier dispositif d'entrée ou à des instructions reçues d'au moins un commutateur câblé (210) ou sans fil (212) en communication avec l'unité de commande ; et
- au moins un second dispositif d'entrée (117) comprenant l'un au moins d'un détecteur d'intensité lumineuse ou d'un détecteur de présence, lequel au moins un second dispositif d'entrée commande les commutateurs associés des charges d'éclairage CC afin de connecter et déconnecter sélectivement lesdites plusieurs charges d'éclairage CC des lignes électriques commutées indépendamment de l'unité de commande.

2. Système selon la revendication 1, dans lequel ledit au moins un commutateur câblé ou sans fil comprend au moins un commutateur de collecte d'énergie actionnable pour transmettre des signaux de commande sans fil en utilisant uniquement l'énergie collectée par le commutateur.

3. Système selon la revendication 1, comprenant en outre au moins une charge de non-éclairage CC (114), chacune desdites au moins une charge de non-éclairage CC étant connectée à une des lignes électriques commutées via un commutateur associé, le commutateur associé réagissant à des données de détecteur provenant dudit au moins un second dispositif d'entrée, dans lequel ladite au moins une charge de non-éclairage comprend l'un au moins d'un moteur miniature pour ouvrir et fermer des volets de fenêtre motorisés, d'un ventilateur de plafond décoratif, d'un ventilateur d'aération caché, d'une commande de conduit HVAC confinée, d'un dispositif de teintage de fenêtre, d'une fenêtre motorisée, d'un aspirateur central, d'un actionneur pour ouvrir une armoire, d'un actionneur pour verrouiller une armoire, ou d'une vanne motorisée ou solénoïde pour ouvrir ou fermer l'eau dans un robinet, une douche ou une baignoire.

4. Système selon la revendication 1, dans lequel ledit au moins un élément d'éclairage CC comprend l'un au moins d'un dispositif d'éclairage à base de LED, d'un dispositif d'éclairage à base d'OLED, d'une feuille imprimée électroluminescente ou d'une ampoule plasma émettrice de lumière, dans lequel le dispositif d'éclairage à LED comprend particulièrement au moins une LED RVB capable de produire de la lumière de couleurs variables.

5. Système selon la revendication 1, dans lequel ledit au moins un premier dispositif d'entrée ou ledit au moins un second dispositif d'entrée comprend également l'un au moins d'un système de sécurité, d'un système HVAC, d'un système de porte de garage, d'un système téléphonique, d'un système d'intercom, d'un système de jeu, d'un système de télévision par câble ou d'un système d'appareil électrique.

6. Système selon la revendication 1, dans lequel l'unité de commande comprend un module de conditionnement de puissance (310) afin de recevoir une entrée électrique, lequel module de conditionnement de puissance comprend au moins l'un d'un circuit convertisseur CA-CC, d'un circuit convertisseur CC-CC, d'un circuit régulateur de tension, d'un circuit limiteur de courant, ou d'un circuit de protection contre les surtensions.

7. Système selon la revendication 1, dans lequel l'unité de commande comprend au moins un circuit électrique CC (312) permettant de commander le moment où l'unité de commande alimente les lignes électriques commutées, dans lequel l'unité de commande comprend notamment un circuit électrique CC par ligne électrique commutée.

8. Système selon la revendication 1, dans lequel l'unité de commande comprend une interface de communications (316) transmettant des signaux entre l'unité de commande et l'un au moins d'un dispositif de calcul externe (320) ou d'un réseau (322), dans lequel l'interface de communications comprend notamment l'un au moins d'un port USB, d'un connecteur RS232, d'un connecteur RJ45, d'un module Bluetooth, d'un module IEEE 802.11, d'un module radiofréquence, ou d'un module d'association de données infrarouge.

9. Système selon la revendication 1, dans lequel l'unité de commande comprend un dispositif d'interface utilisateur intégré (318) afin de configurer l'unité de commande, lequel dispositif d'interface utilisateur intégré comprend l'un au moins d'un affichage vidéo, d'un écran tactile, d'un pavé, d'un clavier, d'une souris, d'au moins un bouton poussoir, d'au moins un cadran, ou d'au moins un commutateur à bascule.

10. Système selon la revendication 1, dans lequel le détecteur de présence comprend un détecteur de mouvement infrarouge passif capable de mettre en marche une ou plusieurs desdites plusieurs charges d'éclairage CC choisies suite à la détection de la présence d'un occupant, et d'arrêter la ou lesdites plusieurs desdites plusieurs charges d'éclairage CC choisies suite à la non-détection de présence d'un occupant pendant une période prédéterminée.

11. Système selon la revendication 1, dans lequel le détecteur d'intensité lumineuse permet de détecter des niveaux d'intensité desdites plusieurs charges d'éclairage CC, et permet d'ajuster l'intensité lumineuse des charges d'éclairage CC lorsque les niveaux d'intensité détectés sont supérieurs ou inférieurs à un seuil d'intensité prédéterminé.

12. Système selon la revendication 1, dans lequel le temporisateur numérique programmable permet de mettre en marche ou d'arrêter le commutateur associé d'une ou de plusieurs desdites plusieurs charges d'éclairage CC à un quelconque moment prédéterminé.

13. Procédé de commande d'une charge basse tension consistant à :
- utiliser une unité de commande comprenant plusieurs lignes électriques commutées qui produisent une électricité CC ;
- utiliser plusieurs charges d'éclairage CC, chaque charge d'éclairage CC comprenant au moins un élément d'éclairage CC, et chaque charge d'éclairage CC comprenant un commutateur associé en aval de l'unité de commande qui connecte sélectivement ledit au moins un élément d'éclairage CC à une desdites plusieurs lignes électriques commutées ;
- utiliser au moins un premier dispositif d'entrée comprenant l'un au moins d'un détecteur de présence, d'un détecteur d'intensité lumineuse ou d'un dispositif de temporisation, l'unité de commande alimentant sélectivement les lignes électriques commutées en réponse à des données de détecteur reçues dudit au moins un premier dispositif d'entrée ou à des instructions reçues d'au moins un commutateur câblé ou sans fil en communication avec l'unité de commande ;
- utiliser au moins un second dispositif d'entrée comprenant l'un au moins d'un détecteur d'intensité lumineuse ou d'un détecteur de présence, lequel au moins un second dispositif d'entrée commande les commutateurs associés des charges d'éclairage CC afin de connecter et déconnecter sélectivement lesdites plusieurs charges d'éclairage CC des lignes électriques commutées ;
- recevoir une sélection de mode de fonctionnement d'unité de commande ;
- recevoir une association entre une charge choisie parmi lesdites plusieurs charges d'éclairage CC, un premier dispositif d'entrée choisi et un second dispositif d'entrée choisi ; et
- alimenter sélectivement la charge d'éclairage CC choisie via sa ligne électrique commutée associée en réponse à des données de détecteur reçues du premier dispositif d'entrée assigné ou du second dispositif d'entrée assigné, l'unité de commande fonctionnant dans le mode de fonctionnement choisi.

14. Procédé selon la revendication 13, dans lequel le mode de fonctionnement est l'un d'un éco-mode où l'unité de commande diminue la quantité d'électricité consommée par les charges d'éclairage CC sans changement perceptible du niveau de lumière, d'un mode d'arrêt automatique commandé par mouvement où l'unité de commande va arrêter des charges d'éclairage CC choisies en réponse à un manque de mouvement détecté, d'un mode de scène où l'unité de commande va illuminer des charges d'éclairage CC choisies dans une ou plusieurs scènes prédéterminées, d'un mode vacances où l'unité de commande va commander les charges d'éclairage CC afin de donner l'impression d'une présence humaine, ou d'un mode de chroma-thérapie où l'unité de commande va commander les charges d'éclairage CC afin de fournir des couleurs d'éclairage prédéterminées voulues.

15. Procédé selon la revendication 13, dans lequel les instructions venant du premier dispositif d'entrée assigné et du second dispositif d'entrée assigné comprennent l'un au moins d'un niveau d'atténuation, d'un niveau d'illumination, d'un niveau de température de couleur, d'un temps de retard d'arrêt automatique, d'un réglage couleur pour LED RVB, d'un réglage de scène, d'un réglage de ventilateur, d'un réglage d'éclairage de jour, d'un réglage de marche/arrêt de retard, ou d'un réglage de temps écoulé.
